# EUROPEAN PATENT SPECIFICATION

(11) **EP 4 080 965 B1**
(45) Date of publication and mention of the grant of the patent: **30.07.2025**
(21) Application number: 21738399.1
(22) Date of filing: 08.01.2021
(51) Int. Cl.: H04L 5/00, H04W 84/12

(54) **METHOD AND APPARATUS FOR INDICATING MULTI-RESOURCE UNIT MULTI-RU MERGE**
VERFAHREN UND GERÄT ZUM ANZEIGEN DER ZUSAMMENFÜHRUNG MEHRERER RESSOURCENEINHEITEN
PROCÉDÉ ET APPAREIL POUR INDIQUER UNE FUSION MULTI-RU D'UNITÉ DE RESSOURCES MULTIPLES

(30) Priority: 10.01.2020 CN 202010027604
(43) Date of publication of application: 26.10.2022
(73) Proprietor: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN); YANG, Mao, Xi'an, Shaanxi 710072 (CN); YAN, Zhongjiang, Xi'an, Shaanxi 710072 (CN)
(74) Representative: Gill Jennings & Every LLP
(86) International application number: PCT/CN2021/070940
(87) International publication number: WO 2021/139791

(56) References cited:
- WO-A1-2019/074953
- WO-A1-2019/240955
- WO-A1-2020/019928
- CN-A- 106 658 722
- CN-A- 108 200 000
- CN-A- 109 600 205
- US-A1- 2019 238 288
- US-A1- 2019 289 604

## Description

### TECHNICAL FIELD

This application relates to the wireless communications field, and in particular, to a multi-resource unit multi-RU combination indication method and apparatus in a wireless communications system.

### BACKGROUND

So far, a wireless local area network (Wireless LAN, WLAN) has evolved for many generations, including 802.11a/b/g, 802.11n, 802.11ac, 802.11ax, and 802.11be that is currently under discussion. The 802.11n standard is referred to as an HT (High Throughput, high throughput) standard, the 802.11ac standard is referred to as a VHT (Very High Throughput, very high throughput) standard, the 802.11ax standard is referred to as an HE (High Efficiency, high efficiency) standard, and the 802.11be standard is referred to as an EHT (Extremely High Throughput, extremely high throughput) standard.

In terms of a bandwidth configuration, the following bandwidth configurations such as 20 MHz, 40 MHz, 80 MHz, 160 MHz, and 80 MHz+80 MHz are currently supported in 802.11ax. A difference between a 160 MHz channel and an 80 MHz+80 MHz channel lies in that the former corresponds to a continuous frequency band, but the latter two 80 MHz channels may be separated. A configuration such as 320 MHz is supported in 802.11be.

In 802.11ax, a user frequency band resource is allocated in a unit of an RU (Resource Unit, resource unit) instead of a 20 MHz channel. In 802.11ax, one 20 MHz channel may include a plurality of RUs, forms may be a 26-tone RU, a 52-tone RU, and a 106-tone RU, and "tone" represents a quantity of subcarriers. In addition, the RU may alternatively be in a form such as a 242-tone RU, a 484-tone RU, or a 996-tone RU. A specific RU allocation notification manner in 11ax is described in the conventional technology 1. US 2019/238288 A1 discloses enhanced resource unit allocation schemes for OFDMA transmission in WLAN. WO 2019/240955 A1 discloses wireless communication with per-station punctured transmissions. US 2019/289604 A1 discloses a resource scheduling method, apparatus and device.

Only allocation of one RU to one or more users is currently supported in 11ax. Consequently, allocation flexibility of a system is reduced, and spectrum utilization of the system is low when preamble puncturing is performed. Therefore, how to improve RU allocation flexibility of a next-generation WLAN system and spectrum utilization is a critical problem.

### SUMMARY

The present invention is defined in the appended claims. To resolve the foregoing problem, this application provides a multi-resource unit multi-RU combination indication method and apparatus, which are applied to a wireless communications system, to improve RU allocation flexibility and improve spectrum utilization.

According to a first aspect, according to independent claim 8, a multi-resource unit multi-RU combination indication method is provided. The method includes: determining a physical layer protocol data unit PPDU, where the PPDU includes a signal field, and the signal field includes a combination indication indicating whether to combine a first RU and a neighboring second RU into a multi-RU; and sending the PPDU.

According to a second aspect, according to independent claim 9, a multi-resource unit multi-RU combination indication method is provided. The method includes:
receiving a physical layer protocol data unit PPDU, where the PPDU includes a signal field, the signal field includes a combination indication indicating whether to combine a first RU and a neighboring second RU into a multi-RU, and the signal field does not include a user field corresponding to the second RU; and determining, based on the signal field, whether the multi-RU is allocated toa station.

According to the method in the first aspect or the second aspect, a plurality of RUs may be allocated to one or more users for data transmission, to improve resource unit allocation flexibility and improve spectral efficiency.

In a possible example, the signal field further includes a resource unit allocation subfield, the resource unit allocation subfield indicates sizes and locations of a plurality of allocated RUs on one 20 MHz channel, and the plurality of RUs include the first RU.

In a possible example, the resource unit allocation subfield indicates that the corresponding 20 MHz channel is divided into any one of the following: [106, -, 52, 52], [52, 52, -, 106], [106, -, 106], and [52, 52, -, 52, 52]; and the second RU is a center 26-tone RU, and the first RU is a 106-tone RU or a 52-tone RU neighboring to the center 26-tone RU.

In a possible example, the resource unit allocation subfield indicates that the corresponding 20 MHz channel is divided into any one of the following: [26, 26, 26, 26, -, 106], [26, 26, 52, -, 106], [52, 26, 26, -, 106], [106, -, 26, 26, 26, 26], [106, -, 52, 26, 26], or [106, -, 26, 26, 52], the second RU is a center 26-tone RU, and the first RU is a 106-tone RU neighboring to the center 26-tone RU.

In a possible example, the signal field further includes a user field corresponding to the first RU, and the signal field does not include a user field corresponding to the second RU; at least one user field corresponding to the first RU includes the combination indication; and if the combination indication indicates to combine the first RU and the second RU into a multi-RU, the multi-RU is allocated to a user indicated by the user field corresponding to the first RU, the PPDU further includes a data field, and the data field includes data carried on the multi-RU.

In a possible example, the first RU is a 106-tone RU, and the 106-tone RU corresponds to at least two user fields.

In this method, a resource unit allocation subfield with a special value and the combination indication are combined to indicate the multi-RU, and a station that supports 802.11ax is compatible. Further, users who perform MU-MIMO transmission on the multi-RU can be simply determined, and there is a low degree of complexity. In addition, the special value of the resource unit allocation subfield and the combination indication are combined, to reduce signaling overheads.

According to the method in the first aspect or the second aspect, the combination indication includes 2 bits; that a first value is used as a value of the combination indication indicates not to combine the first RU and the neighboring second RU; that a second value is used as the value of the combination indication indicates to combine the first RU and a left neighboring second RU; and that a third value is used as the value of the combination indication indicates to combine the first RU and a right neighboring second RU.

According to a third aspect, according to claim 1, this application provides a communications apparatus. The communications apparatus may be an access point, or may be a station, and may implement the method and the function in the first aspect. The function may be implemented by hardware, or may be implemented by hardware executing corresponding software. The hardware or the software includes one or more modules corresponding to the foregoing function.

In a possible design, the apparatus includes a processing unit and a transceiver unit. The processing unit is configured to support the access point or the station to perform a corresponding function in the foregoing methods. The transceiver unit is configured to support communication between the apparatus and another apparatus. The apparatus may further include a storage unit, the storage unit is configured to be coupled to the processing unit, and the storage unit stores program instructions and data necessary for the access point. Optionally, the apparatus may alternatively be a chip. For example, the transceiver unit is an input/output interface, and the processing unit may be a processing circuit in the chip, so that a device on which the chip is installed can implement the method and the function in the first aspect.

According to a fourth aspect, according to independent claim 2, this application provides a communications apparatus. The communications apparatus may be an access point, or may be a station, and may implement the method and the function in the second aspect. The function may be implemented by hardware, or may be implemented by hardware executing corresponding software. The hardware or the software includes one or more modules corresponding to the foregoing function.

In a possible design, the apparatus includes a processing unit and a transceiver unit. The processing unit is configured to support the access point or the station to perform a corresponding function in the foregoing methods. The transceiver unit is configured to support communication between the apparatus and another apparatus. The apparatus may further include a storage unit, the storage unit is configured to be coupled to the processing unit, and the storage unit stores program instructions and data necessary for the access point. Optionally, the apparatus may alternatively be a chip. For example, the transceiver unit is an input/output interface, and the processing unit may be a processing circuit in the chip, so that a device on which the chip is installed can implement the method and the function in the second aspect.

### BRIEF DESCRIPTION OF DRAWINGS

To describe embodiments of this application more clearly, the following briefly describes the accompanying drawings for describing embodiments.
FIG. 1 is a schematic diagram of a possible application scenario according to an embodiment of this application;
FIG. 2 is a schematic diagram of a structure of an HE-SIG-B field in 802.11ax;
FIG. 3 is a schematic diagram of a manner of obtaining a multi-RU through combination according to an embodiment of this application;
FIG. 4 is a schematic flowchart of a multi-RU indication method according to an embodiment of this application;
FIG. 5 shows an example of a structure of a common field and a per station field in a trigger frame according to an embodiment of this application;
FIG. 6 is a schematic diagram of indicating allocation of a plurality of resource units within 20 MHz according to an embodiment of this application;
FIG. 7 is a schematic flowchart of another multi-RU indication method according to an embodiment of this application;
FIG. 8 is a schematic flowchart of still another multi-RU indication method according to an embodiment of this application;
FIG. 9 is a schematic diagram of indicating a combination of a plurality of resource units within 20 MHz according to an embodiment of this application;
FIG. 10 is a schematic flowchart of yet another multi-RU indication method according to an embodiment of this application;
FIG. 11 is another schematic diagram of indicating a combination of a plurality of resource units within 20 MHz according to an embodiment of this application;
FIG. 12 is a schematic diagram of a structure of an apparatus according to an embodiment of this application;
FIG. 13 is a schematic diagram of a structure of another apparatus according to an embodiment of this application; and
FIG. 14 is a schematic diagram of a structure of another apparatus according to an embodiment of this application.

### DESCRIPTION OF EMBODIMENTS

A scenario described in embodiments of this application is intended to describe the technical solutions in embodiments of this application more clearly, and does not constitute a limitation on the technical solutions provided in embodiments of this application.

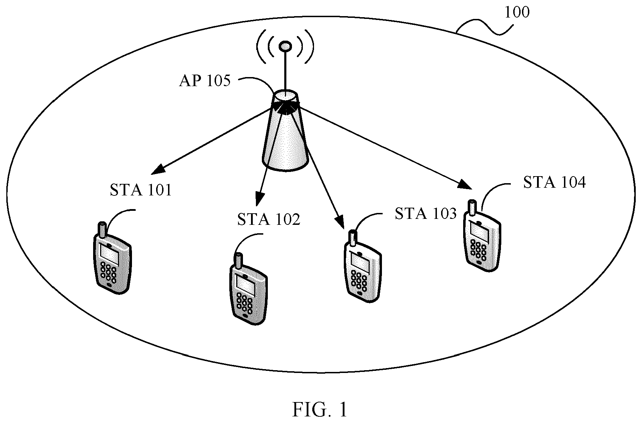

FIG. 1 shows a wireless local area network (Wireless Local Access Network, WLAN for short) communications system 100. The communications system 100 includes an access point AP 105 and stations (for example, a STA 101 to a STA 104). Both the access point and the station may support the 802.11be standard, a next-generation wireless communications standard protocol of 802.11be, or a next-next-generation wireless communications standard protocol, and certainly, may further support a standard before 802.11be in a compatible manner, for example, 802.11ax/ac/a/b/g/n.

The access point (for example, the AP 105) is an apparatus having a wireless communications function, and the access point AP 105 may be an AP that performs data transmission based on the 802.11 protocol. In an example, a plurality of stations STAs are connected to an AP through a radio link that follows Wi-Fi, to implement a general connection to the Internet or another wide area network. In some implementations, the STA may also be used as an AP. It can be understood that a quantity of APs and a quantity of STAs in the WLAN communications system 100 are merely examples, and do not constitute a limitation on embodiments of this application.

A person skilled in the art may understand that, in the WLAN communications system, the station used in this application may alternatively be various user terminals having a wireless communications function, a user apparatus, an access apparatus, a subscriber station, a subscriber unit, a mobile station, a user agent, user equipment, or another name. The user terminal may include various handheld devices having a wireless communications function, a vehicle-mounted device, a wearable device, a computing device, another processing device connected to a wireless modem, and user equipment (User Equipment, UE for short), a mobile station (Mobile station, MS for short), a terminal (terminal), a terminal device (Terminal Equipment), a portable communications device, a handheld machine, a portable computing device, an entertainment device, a game device or system, a device with a global positioning system, an internet of things node in an internet of things communications system, any other proper device configured to perform network communication via a wireless medium, or the like in various forms. Herein, for ease of description, the devices mentioned above are collectively referred to as stations or STAs.

The access point AP used in this application is an apparatus that is deployed in a wireless communications network and that is configured to provide a wireless communications function for the station, and may serve as a center of a WLAN. The access point AP may alternatively be a base station, a router, a gateway, a repeater, a communications server, a switch, a bridge, or the like. The base station may include a macro base station, a micro base station, a relay station, or the like in various forms. Herein, for ease of description, the foregoing apparatus that provides a wireless communications function service for the station STA is collectively referred to as an access point or an AP.

So far, the WLAN has evolved for many generations, including 802.11a/b/g, 802.11n, 802.11ac, 802.11ax, and 802.11be that is currently under discussion. The 802.11n standard is referred to as an HT (High Throughput, high throughput) standard, the 802.11ac standard is referred to as a VHT (Very High Throughput, very high throughput) standard, the 802.11ax standard is referred to as an HE (High Efficient, high efficiency) standard, and the 802.11be standard is referred to as an EHT (Extremely High Throughput, extremely high throughput) standard.

In terms of a bandwidth configuration, the following bandwidth configurations such as 20 MHz, 40 MHz, 80 MHz, 160 MHz, and 80 MHz+80 MHz are currently supported in 802.11ax. A difference between a 160 MHz channel and an 80 MHz+80 MHz channel lies in that the former corresponds to a continuous frequency band, but the latter two 80 MHz channels may be separated. In a future Wi-Fi protocol such as 802.11be, a configuration such as 320 MHz is supported.

In 802.11ax, a user frequency band resource is allocated in a unit of an RU (Resource Unit, resource unit) instead of a 20 MHz channel. In 802.11ax, one 20 MHz channel may include a plurality of RUs, forms may be a 26-tone RU, a 52-tone RU, and a 106-tone RU, and "tone" represents a quantity of subcarriers. In addition, the RU may alternatively be in a form such as a 242-tone RU, a 484-tone RU, or a 996-tone RU.

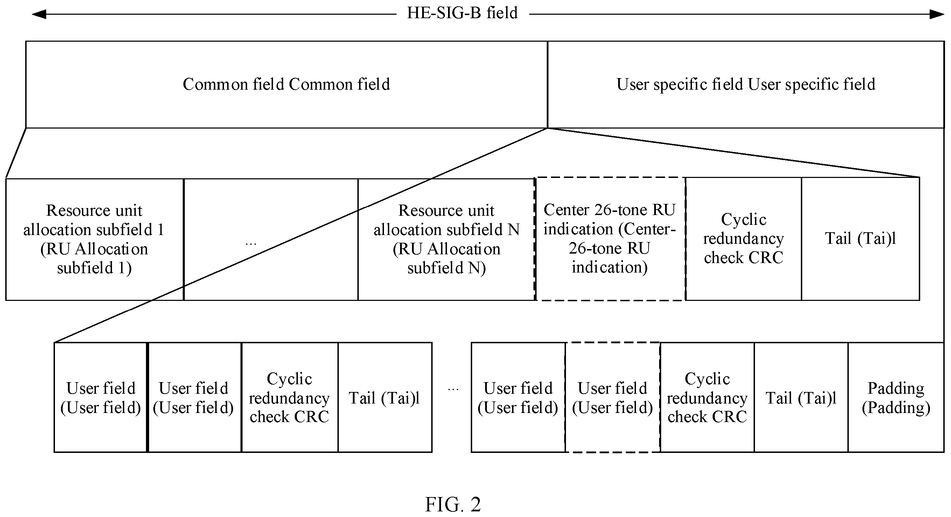

In 802.11ax, a method for notifying RU allocation of a user specifically relates to an RU allocation subfield in a common field of HE-SIG-B in an MU PPDU. For clear description, a structure of HE-SIG-B is first described herein, as shown in FIG. 2.

HE-SIG-B includes two part. A first part is a common field and includes 1 to N resource unit allocation subfields (RU Allocation subfield), a center 26-tone (Center 26-Tone) resource unit indication field existing when a bandwidth is greater than or equal to 80 MHz, a cyclic redundancy code (Cyclic Redundancy Code, CRC) for check, and a tail (Tail) subfield for cyclic decoding. In addition, in a user specific field (User Specific Field), there are 1 to M user fields (User Field) in a resource unit allocation sequence. Every two of the M user fields usually form one group, and every two user fields are followed by one CRC and one tail subfield. However, the last group should be excluded. The last group may include one or two user fields.

Before a resource unit allocation indication method is specifically described, tone plans (Tone Plan) in cases of different data packet bandwidths in 802.11ax are described herein. When a bandwidth is 20 MHz, the entire bandwidth may include one entire 242-tone RU, or may include various combinations of a 26-tone RU, a 52-tone RU, and a 106-tone RU. In addition to an RU used to transmit data, the entire bandwidth further includes some guard (Guard) subcarrier, null subcarriers, or direct current (Direct Current, DC) subcarriers.

When a bandwidth is 40 MHz, the entire bandwidth is approximately equivalent to a duplicate of a tone plan of 20 MHz. The entire bandwidth may include one entire 484-tone RU, or may include various combinations of a 26-tone RU, a 52-tone RU, a 106-tone RU, and a 242-tone RU.

When a bandwidth is 80 MHz, the entire bandwidth includes four resource units in a unit of a 242-tone RU. In particular, in the middle of the entire bandwidth, there is a center 26-tone RU including two 13-tone subunits. The entire bandwidth may include an entire 996-tone RU, or may include various combinations of a 26-tone RU, a 52-tone RU, a 106-tone RU, a 242-tone RU, and a 484-tone RU.

When a bandwidth is 160 MHz or 80 MHz+80 MHz, the entire bandwidth may be considered as a duplication of a tone plan of two 80 MHz channels, and the entire bandwidth may include one entire 2 X 996-tone RU, or may include various combinations of a 26-tone RU, a 52-tone RU, a 106-tone RU, a 242-tone RU, a 484-tone RU, and a 996-tone RU.

The foregoing tone plans are in a unit of a 242-tone RU. A subcarrier located on a left side of the bandwidth may be considered as a lowest frequency, and a subcarrier located on a right side of the bandwidth may be considered as a highest frequency. From left to right, 242-tone RUs may be numbered 1, 2, ..., 8. It should be noted that, in a data field, the eight 242-tone RUs are in a one-to-one correspondence with eight 20 MHz channels in ascending order of frequencies, but because of existence of the center 26-tone RU, frequencies do not completely overlap.

The following describes a 11ax resource unit allocation indication method, and a concept of a content channel (Content Channel, CC) is introduced in 802.11ax. When a data packet bandwidth is only 20 MHz, HE-SIG-B includes only one content channel, the content channel includes one resource unit allocation subfield, and the resource unit allocation subfield is used to indicate a resource unit allocation indication within a range of a 242-tone (tone) RU in a data part. The resource unit allocation subfield includes eight bits, and all possible resource unit arrangement and combination manners within the 242-tone RU are indicated by using an index. In addition, for an RU whose size is greater than or equal to a size of a 106-tone RU, a quantity of users who perform SU/MU-MIMO transmission on the RU is indicated by using an index. An index table of the resource unit allocation subfield is as follows:

**Table 1 Resource unit allocation subfield in 11ax**

| Resource unit allocation subfield (B7, B6, B5, B4, B3, B2, B1, and B0) | #1 | #2 | #3 | #4 | #5 | #6 | #7 | #8 | #9 | Quantity |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 1 |
| 00001001 | 52 | | 26 | 26 | 26 | 26 | 26 | 52 | | 1 |
| 00001010 | 52 | | 26 | 26 | 26 | 52 | | 26 | 26 | 1 |
| 00001011 | 52 | | 26 | 26 | 26 | 52 | | 52 | | 1 |
| 00001100 | 52 | | 52 | | 26 | 26 | 26 | 26 | 26 | 1 |
| 00001101 | 52 | | 52 | | 26 | 26 | 26 | 52 | | 1 |
| 00001110 | 52 | | 52 | | 26 | 52 | | 26 | 26 | 1 |
| 00001111 | 52 | | 52 | | 26 | 52 | | 52 | | 1 |
| 00010y₂y₁y₀ | 52 | | 52 | | - | 106 | | | | 8 |
| 00011y₂y₁y₀ | 106 | | | | - | 52 | | 52 | | 8 |
| 00100y₂y₁y₀ | 26 | 26 | 26 | 26 | 26 | 106 | | | | 8 |
| 00101y₂y₁y₀ | 26 | 26 | 52 | | 26 | 106 | | | | 8 |
| 00110y₂y₁y₀ | 52 | | 26 | 26 | 26 | 106 | | | | 8 |
| 00111y₂y₁y₀ | 52 | | 52 | | 26 | 106 | | | | 8 |
| 01000y₂y₁y₀ | 106 | | | | 26 | 26 | 26 | 26 | 26 | 8 |
| 01001y₂y₁y₀ | 106 | | | | 26 | 26 | 26 | 52 | | 8 |
| 01010y₂y₁y₀ | 106 | | | | 26 | 52 | | 26 | 26 | 8 |
| 01011y₂y₁y₀ | 106 | | | | 26 | 52 | | 52 | | 8 |
| 0110y₂y₀z₁z₀ | 106 | | | | - | 106 | | | | 16 |
| 01110000 | 52 | | 52 | | - | 52 | | 52 | | 1 |
| 01110001 | 242-tone RU empty (corresponding to zero users) | | | | | | | | | 1 |
| 01110010 | 484-tone RU for which a resource unit allocation subfield of an HE-SIG-B content channel includes zero user fields | | | | | | | | | 1 |
| 01110011 | 996-tone RU for which a resource unit allocation subfield of an HE-SIG-B content channel includes zero user fields | | | | | | | | | 1 |
| 011101x₁x₀ | Reserved | | | | | | | | | 4 |
| 01111y₂y₁y₀ | Reserved | | | | | | | | | 8 |
| 10y₂y₁y₀z₂z₁z₀ | 106 | | | | 26 | 106 | | | | 64 |
| 11000y₂y₁y₀ | 242 | | | | | | | | | 8 |
| 11001y₂y₁y₀ | 484 | | | | | | | | | 8 |
| 11010y₂y₁y₀ | 996 | | | | | | | | | 8 |
| 11011y₂y₁y₀ | Reserved | | | | | | | | | 8 |
| 111x₄x₃x₂x₁x₀ | Reserved | | | | | | | | | 32 |

Each row in the table represents an RU configuration status, most RU configurations in the table fall within a 242-tone range, and a small part of RU configurations indicate that an RU is a 242-tone RU, a 484-tone RU, or a 996-tone RU. Each 8-bit resource unit allocation subfield is used to notify an RU allocation status in a corresponding range of 20 MHz. It can be understood as follows: 20 MHz corresponds to one resource unit allocation subfield, 40 MHz corresponds to two resource unit allocation subfields, 80 MHz corresponds to four resource unit allocation subfields, and 160 MHz corresponds to eight resource unit allocation subfields.

It should be noted that a sequence of the user fields in the user specific field is the same as a sequence of RUs obtained through division based on a corresponding resource unit allocation subfield, and the user may read a STA ID in the user field, to identify whether the user field belongs to the user. The user may learn of an RU allocation status of the user with reference to a location of the user field and the corresponding resource unit allocation subfield.

Only allocation of one RU to one or more users is currently supported in 11ax. Consequently, allocation flexibility of a system is reduced, and spectrum utilization of the system is low when preamble puncturing is performed. To resolve these problems, allocation of a plurality of RUs to one or more users is proposed in embodiments of this application, to improve RU allocation flexibility and improve spectrum utilization of the system.

The following describes the solution in embodiments with reference to more accompanying drawings.

In an embodiment of this application, that one user performs data transmission on a plurality of RUs is supported. In this embodiment of this application, a "multi-RU" is usually a combination of a plurality of RUs that are contiguous or noncontiguous in frequency domain and that are defined in 802.11ax. Optionally, a combination of a plurality of RUs that are contiguous or noncontiguous in frequency domain and that are defined in 802.11ax may also be referred to as a multi-RU, and the "multi-RU" may be defined in a next generation of 802.11ax, for example, an RU newly defined in 802.11be. Certainly, the "multi-RU" may alternatively be another name, for example, may be referred to as an RU combination. A quantity of combined RUs in the multi-RU is not limited. For example, the multi-RU may be a combination of two RUs, or may be a combination of three or more RUs. The multi-RU may be allocated to one or more users for data transmission, and a plurality of users may perform MU-MIMO transmission on the multi-RU. It should be noted that, the "user" mentioned in this embodiment of this application is a general term of a network element that may perform transmission by using a resource unit, may be a station, or may be an access point.

Optionally, a combination of a plurality of large-size RUs (large-size RU) is a multi-RU, or a combination of a plurality of small-size RUs (small-size RU) may be a multi-RU. In this embodiment of this application, an RU whose size (Size) is smaller than a size of a 242-tone RU is a small-size RU. For example, a 26-tone RU, a 52-tone RU, and a 106-tone RU are small-size RUs. An RU whose size (Size) is greater than or equal to a size of a 242-tone RU is a large-size RU. For example, a 242-tone RU, a 484-tone RU, and a 996-tone RU are large-size RUs.

The combination of a plurality of small-size RUs (a combination of small-size RUs) may be a mutual combination of a 26-tone RU, a 52-tone RU, and a 106-tone RU. For example, a combination of at least two small-size RUs is a multi-RU. Optionally, in this embodiment of this application, it is agreed that small-size RUs of a same size are not combined. To be specific, it is agreed that mutually combining small-size RUs of a same size into a multi-RU is not supported. For example, a 26-tone RU and a 26-tone RU are not combined, a 52-tone RU and a 52-tone RU are not combined, and a 106-tone RU and a 106-tone RU are not combined. It is assumed that the multi-RU is a combination of two small-size RUs. Therefore, a first combination of small-size RUs includes one 106-tone RU and one 26-tone RU, and may be recorded as (106+26); a second combination of small-size RUs includes one 52-tone RU and one 26-tone RU, and may be recorded as (52+26); and a third combination of small-size RUs includes one 106-tone RU and one 52-tone RU, and may be recorded as (106+52).

The combination of a plurality of large-size RUs (a combination of large-size RUs) may be a mutual combination of a 242-tone RU, a 484-tone RU, and a 996-tone RU. For example, a combination of at least two large-size RUs is a multi-RU, and any large-size RU may be any one of a 242-tone RU, a 484-tone RU, and a 996-tone RU. It is assumed that the multi-RU includes two large-size RUs, and a combination of large-size RUs may be (242+242), (242+484), (242+996), or (448+996). For another example, the combination of large-size RUs may be as follows: 1. (242+484) (a combination of contiguous or noncontiguous RUs within each 80 MHz segment (a combination of contiguous or noncontiguous RUs within each 80 MHz segmentt)), 2. (242+242) (a combination of noncontiguous RUs in a case of puncturing (Punctured case, non-contiguous)), 3. (484+996), 4. (242+484+242+484), 5. (242+484+996), 6. (242+242+996), or the like.

It should be noted that, in this embodiment of this application, a plurality of constraint conditions are imposed on a combination of a plurality of RUs. A constraint condition includes: 1. A small-size RU and a large-size RU are not combined; 2. A combination of small-size RUs are on one 20 MHz channel (a combination of small-size RUs shall not cross 20 MHz channel boundary); 3. The combination of small-size RUs needs to be a combination of contiguous (or neighboring) small-size RUs. Based on the constraint condition, the combination of small-size RUs may be a combination of one 52-tone RU and one 26-tone RU that are contiguous within 20 MHz, or a combination of one 106-tone RU and one 26-tone RU that are contiguous within 20 MHz. Locations of one 52-tone RU and one 26-tone RU that are contiguous within 20 MHz may be that the 52-tone RU is located on the left of the 26-tone RU or may be that the 52-tone RU is located on the right of the 26-tone RU. Locations of one 106-tone RU and one 26-tone RU that are contiguous within 20 MHz may be that the 106-tone RU is located on the left of the 26-tone RU or may be that the 106-tone RU is located on the right of the 26-tone RU. An RU combination manner with a constraint condition may be referred to as a limited RU combination manner. In the limited RU combination manner, a balance between combination flexibility and a gain brought by a combination is considered, so that the combination of a plurality of RUs is more proper and has a lower degree of complexity. Certainly, no constraint condition may alternatively be imposed on the RU combination. In other words, there may be a mutual combination of any RU. Such a combination manner may be referred to as an unlimited RU combination manner.

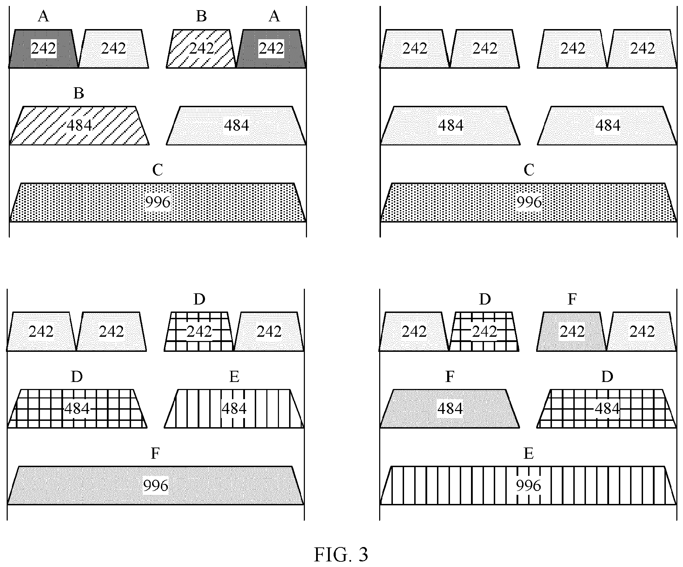

An example of a manner of obtaining a multi-RU through combination may be shown in FIG. 3. A combination of large-size RUs within 80 MHz (referring to a manner of a combination of A, B, and the like in FIG. 3) is supported. Two 242-tone RUs whose identifiers are A are combined, and one 242-tone RU and one 484-tone RU whose identifiers are B are combined. Large-size RUs within 160 MHz are combined (referring to a manner of a combination of C, D, E, F, and the like in FIG. 3). Similarly, two RUs whose identifiers are C are combined, four RUs whose identifiers are D are combined, two RUs whose identifiers are E are combined, and three RUs whose identifiers are F are combined. In addition, FIG. 3 shows only a part of possible combinations. A location of a specific combined RU may change. This is not specifically limited in this embodiment of this application.

For sizes, locations, and division status of a small-size RU and a large-size RU and indication methods, refer to the existing 802.11ax, for example, refer to Table 1.

Only allocation of one RU to one or more user for uplink or downlink OFDMA transmission is currently supported in the 802.11ax standard. In a next-generation Wi-Fi protocol (for example, 802.11be), allocation of a multi-RU to one or more users for uplink or downlink OFDMA transmission is supported. Therefore, in the next-generation Wi-Fi protocol, how to effectively indicate the multi-RU and a station using the multi-RU is a critical problem.

In this embodiment of this application, a signal field in a preamble of a PPDU is mainly improved. The signal field may be a signal B (SIG-B) field. The SIG-B field may be referred to as an EHT-SIG-B field. It can be understood that the SIG-B field may alternatively have another name. The signal field includes a resource unit allocation subfield and a user field, one resource unit allocation subfield corresponds to allocation of frequency domain resource units on one 20 MHz channel, and one resource unit allocation subfield indicates a size and a location of one or more resource units included in 20 MHz. The resource unit allocation subfield includes a plurality of bits. When 20 MHz includes an RU whose size is greater than or equal to a size of a 106-tone RU, because the RU whose size is greater than or equal to the size of the 106-tone RU may be used for MU-MIMO transmission, some bits in the resource unit allocation subfield may also be used to indicate a quantity of users who perform MU-MIMO transmission on the RU whose size is greater than or equal to the size of the 106-tone RU. Optionally, for the resource unit allocation subfield, refer to a design of a resource unit allocation subfield in HE-SIG-B in 802.11ax. The user field includes a station ID subfield (STA ID subfield), the station ID subfield includes an associated identifier AID of a station, and one or more user fields correspond to one resource unit indicated by the resource unit allocation subfield. The station may determine a size and a location of an allocated RU based on the STA ID subfield and a correspondence between a user field and an RU.

It should be noted that, the solution in this embodiment of this application may be applied to communication between an access point and a station, communication between access points, and communication between stations. During communication between an access point and a station, for example, downlink transmission, a sending device is an access point, and a receiving device is a station. For example, the access point sends a downlink PPDU, allocates a multi-RU to one or more stations, and indicates the multi-RU. The station receives data carried on the multi-RU. For another example, during uplink transmission, a sending device is a station, and a receiving device is an access point. For example, the station sends an uplink PPDU, sends uplink data on the multi-RU, and indicates the multi-RU. During communication between access points, for example, during coordination between APs, a sending device is an access point, and the receiving device is also an access point. During communication between stations, for example, D2D transmission, a sending device is a station, and a receiving device is also a station.

For ease of description, in this embodiment of this application, description is provided by using an example in which communication is performed between an access point and a station, the sending device is an access point, and the receiving device is a station. It can be understood that the sending device may alternatively be a station or an access point, and the receiving device may alternatively be a station or an access point.

The following describes in detail a design of a signal field with reference to each embodiment.

Embodiment 1 provides a flexible and effective multi-RU indication method, so that a combination of a plurality of RUs may be allocated to one or more users for data transmission, to improve spectral efficiency and resource unit allocation flexibility.

Method 1: An access point sends a PPDU. The PPDU includes a signal field. The signal field includes a resource unit allocation subfield and a user field. One resource unit allocation subfield corresponds to allocation of frequency domain resource units on one 20 MHz channel, and one resource unit allocation subfield indicates a size and a location of one or more resource units included in 20 MHz. The resource unit allocation subfield includes a plurality of bits. Optionally, for the resource unit allocation subfield, refer to a design of a resource unit allocation subfield in HE-SIG-B in 802.11ax. When 20 MHz includes an RU whose size is greater than or equal to a size of a 106-tone RU, because that the RU whose size is greater than or equal to the size of the 106-tone RU may be used for MU-MIMO transmission is defined in 802.11ax, optionally, some bits in the resource unit allocation subfield may also be used to indicate a quantity of users who perform MU-MIMO transmission on the RU whose size is greater than or equal to the size of the 106-tone RU. In this embodiment of this application, an RU allocated to a plurality of users may be referred to as a MU-MIMO RU. The user field includes a station ID subfield (STA ID subfield), the station ID subfield includes an associated identifier AID of a station, and one or more user fields correspond to one resource unit indicated by the resource unit allocation subfield. The station may determine a size and a location of an allocated RU based on the station ID subfield and a correspondence between a user field and an RU. In a possible implementation, to indicate to allocate a multi-RU to one or more stations to perform data transmission, a station ID subfield in each user field corresponding to the multi-RU may be set to an AID of the station. The station sequentially reads station ID subfields in all user fields in the signal field, and determines that RUs corresponding to a user field of the AID of the station are combined into a multi-RU, to indicate the multi-RU. For example, sizes that are of RUs obtained by dividing one 20 MHz channel and that are indicated by the resource unit allocation subfieldare sequentially as follows: a 26-tone RU, a 26-tone RU, a 26-tone RU, a 26-tone RU, a 26-tone RU, a 52-tone RU, and a 52-tone RU. For ease of description, this is recorded as [26, 26, 26, 26, 26, 52, 52]. The signal field includes seven user fields. AID subfields in a fifth user field and a sixth subfield are set to an AID of a STA 101. Therefore, the STA 101 sequentially reads the seven user fields, and determines that the fifth 26-tone RU and the first 52-tone RU are combined and allocated to the STA 101, so that the STA 101 may perform communication on the multi-RU.

Method 2: Although a multi-resource unit may be allocated in Method 1, because a plurality of user fields correspond to one station, and all user fields carry a same STA ID subfield, a large amount of duplicate information exists in a plurality of user fields corresponding to one multi-RU, and transmission efficiency is low. To improve system performance, information in a user field other than a last user field in the plurality of user fields corresponding to the multi-RU is modified in Method 2, and absolute or relative location information of a next combined RU is indicated in the another user field. Through such an indication, a station to which the multi-RU is allocated may directly learn of a size and a location of the next combined RU after reading a user field corresponding to a first RU. In Method 2, the station does not need to sequentially read all user fields, to reduce consumed energy to some extent, and improve efficiency. For example, a resource unit allocation subfield indicates that one 20 MHz channel is divided into [26, 26, 26, 26, 26, 52, 52]. An access point allocates the multi-RU to a STA 101. The multi-RU includes the first 26-tone RU and the first 52-tone RU, and a user specific field includes seven user fields. A first user field corresponds to the first 26-tone RU, and carried location information indicates that a next RU combined with the first 26-tone RU is the sixth RU, namely, the first 52-tone RU. Therefore, the STA 101 reads a first user field (a STA ID subfield in the first user field is an AID of the STA 101), determines, based on the location information, that the next combined RU is the sixth RU, and determines, after reading a user field corresponding to the sixth RU, that there is no another combined RU after the 52-tone RU in the multi-RU. In this case, the STA 101 determines that the multi-RU allocated by the access point to the STA 101 is a combination of the first 26-tone RU and the first 52-tone RU, so that the STA 101 may perform communication on the multi-RU. Optionally, the location information may include nine bits, and one value of the nine bits may uniquely correspond to a size and a location of one RU, to uniquely determine the size and the location of the next combined RU.

In the method in this embodiment, a multi-RU obtained in a limited combination manner may be indicated, and a multi-RU obtained in an unlimited combination manner may also be indicated. In the method, there is high flexibility and a simple implementation. However, because one multi-RU corresponds to a plurality of user fields, and there is duplicate signaling information in the plurality of user fields, there is large redundancy and low efficiency.

### Embodiment 2

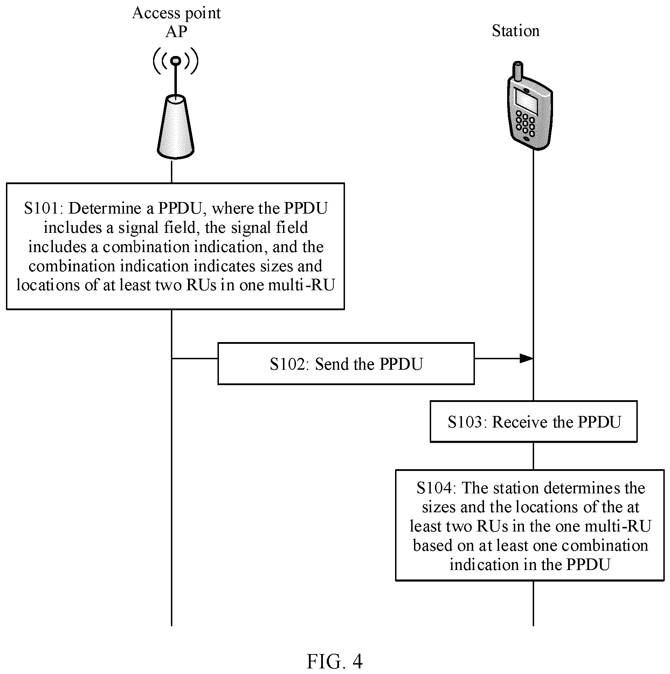

Embodiment 2 provides another multi-RU indication method. A signal field carries a combination indication, to indicate a multi-RU. There is high flexibility and a simple implementation. As shown in FIG. 4, the method includes the following steps.

S101: An access point determines a PPDU, where the PPDU includes a signal field, the signal field includes at least one combination indication, and the at least one combination indication indicates sizes and locations of at least two RUs in one multi-RU.

Optionally, the PPDU includes data that is of a station and that is carried on one multi-RU. Optionally, the PPDU further includes data carried on another RU.

S102: The access point sends the PPDU.

S103: The station receives the PPDU.

S104: The station determines the sizes and the locations of the at least two RUs in the one multi-RU based on the at least one combination indication in the PPDU. Optionally, the station obtains the data on the multi-RU. Optionally, the combination indication includes one or more bits. The multi-RU includes at least two RUs, and may be a combination of large-size RUs, or may be a combination of small-size RUs.

The signal field includes a resource unit allocation subfield and one or more user fields. One resource unit allocation subfield corresponds to allocation of frequency domain RUs within 20 MHz, and one resource unit allocation subfield indicates a size and a location of one or more RUs within 20 MHz. The resource unit allocation subfield includes a plurality of bits. Optionally, for the resource unit allocation subfield, refer to a design of a resource unit allocation subfield in HE-SIG-B in 802.11ax. The user field includes a STA ID subfield, and the STA ID subfield is used to indicate a specific station to which an RU corresponding to the user field is allocated.

Therefore, in order that the station can accurately obtain the sizes and the locations of the at least two RUs in the multi-RU, a plurality of multi-RU indication methods are provided in this embodiment of this application. Because sizes and locations of a plurality of RUs may be determined based on the resource unit allocation subfield, the locations of the at least two RUs in the multi-RU may be determined based on the resource unit allocation subfield and the combination indication.

Method 1: Any user field corresponding to the at least two RUs in the multi-RU includes the combination indication. For example, the multi-RU includes an RU 1 and an RU 2, the RU 1 corresponds to a user field 1, the RU 2 corresponds to a user field 2, the user field 1 carries the combination indication, and the RU 1 and the RU 2 may be large-size RUs, or may be small-size RUs.

Implementation 1: That a first value is used as a value of the combination indication is used to indicate to combine the RU 1 and the neighboring RU 2. In other words, that the first value is used as the value of the combination indication is used to indicate that the multi-RU includes the RU 1 and the neighboring RU 2. That the RU 2 is neighboring to the RU 1 may alternatively be that the RU 2 and the RU 1 are contiguous. The RU 2 may be a left neighboring RU of the RU 1, or may be a right neighboring RU of the RU 1. That a second value is used as the value of the combination indication is used to indicate not to perform combination. For example, the combination indication includes 1 bit, and the 1 bit may be a reserved bit in the user field, or may be a newly added bit in the user field. For example, that 1 is used as the value of the combination indication is used to indicate to combine the RU 1 and the neighboring (or contiguous) RU 2 into the multi-RU. For example, the combination indication in the user field 1 corresponding to a 106-tone RU includes 1 bit. If that 1 is used as the value of the combination indication is used to indicate to combine the 106-tone RU and a neighboring 26-tone RU into one multi-RU, or if that 0 is used as the value of the combination indication is used to indicate not to combine the 106-tone RU and a neighboring 26-tone RU, or is used to indicate not to combine the 106-tone RU and another RU. On one 20 MHz channel, if the 106-tone RU is located on a left side of the 20 MHz channel, the neighboring 26-tone RU is located on a right side; or if the 106-tone RU is located on a right side of the 20 MHz channel, the neighboring 26-tone RU is located on a left side.

Implementation 2: A user field type in the user field 1 may be used as the combination indication. The user field type indicates to combine the RU 1 corresponding to the user field 1 and the neighboring RU 2. In other words, the user field type indicates that the RU 1 is a combined RU, and is to be combined with the neighboring RU 2 of the RU 1. Certainly, the neighboring RU 1 may be located on a left side, or may be located on a right side.

Implementation 3: A special STA ID in the user field 1 may be used as the combination indication. In other words, that a special value, for example, 2046, is used for the STA ID subfield in the user field 1 may be used to indicate to combine the RU 1 corresponding to the user field 1 and the neighboring RU 2.

Optionally, in Implementation 1 to Implementation 3, an RU is combined with a right neighboring RU by default. For example, the RU 2 is a left neighboring RU of the RU 1, the user field 1 is located on the left of the user field 2, the user field 1 carries the combination indication, and that the first value is used as the value of the combination indication is used to indicate to combine the RU 1 and a right neighboring RU 2.

Implementation 4: The user field 1 carries a bitmap, and the bitmap is used to indicate specific RUs that are on the 20 MHz channel and that are included in the multi-RU combination. In other words, the bitmap may be used to indicate specific RUs that are on the 20 MHz channel and that are to be combined into the multi-RU. One bit in the bitmap corresponds to one RU. For example, 9 bits are set, 1100 0000 0 indicates that the multi-RU combination is a combination of a first RU and a second RU, and 1100 1000 0 indicates that the multi-RU combination is a combination of a first RU, a second RU, and a fifth RU.

Implementation 5: The user field 1 carries an index of a combined RU. For example, the user field 1 carries an index of the RU 2, and the index indicates that an RU to be combined with the RU 1 is the RU 2. For example, 3 bits are used to indicate to combine the RU 2 and the RU 1 within 20 MHz.

It should be noted that, if the RU 1 is located on the left of the RU 2, the user field 1 may carry the combination indication, to indicate to combine the RU 1 and the RU 2. In this case, the combination indication may be implemented in Implementation 1, Implementation 4, and Implementation 5. Optionally, the user field 2 may alternatively carry the combination indication in a manner in Implementation 1 to Implementation 5. The user field 2 also carries the combination indication based on a case in which the user field 1 carries the combination indication, to improve robustness. If the RU 1 is located on the right of the RU 2, the user field 2 is located before the user field 1. In this case, the user field 2 may carry the combination indication. A method is similar, and details are not described again. In Method 1, there is a lower degree of complexity and a simple implementation. A STA does not need to read each user field, to reduce a degree of complexity of processing performed by the STA, and reduce consumed energy. In addition, Implementation 4 and Implementation 5 may be applied to an unlimited RU combination manner.

Method 2: Each user field corresponding to the at least two RUs in the multi-RU includes a combination indication. The sizes and the locations of the at least two RUs in the multi-RU are jointly determined based on the combination indication in each user field. For example, the multi-RU includes an RU 1 and an RU 2, the RU 1 corresponds to a user field 1, the RU 2 corresponds to a user field 2, the user field 1 carries a combination indication 1, and the user field 2 carries a combination indication 2. That a first value is used as a value of the combination indication 1 is used to indicate that the RU 1 needs to be combined. In other words, that the first value is used as the value of the combination indication 1 is used to indicate that the multi-RU includes the RU 1. That the first value is used as a value of the combination indication 2 is used to indicate that the RU 2 needs to be combined. In other words, the multi-RU includes the RU 2. Therefore, sizes and locations of the RU 1 and the RU 2 in the multi-RU may be determined based on a resource unit allocation subfield with reference to the combination indication 1 and the combination indication 2. Method 2 may be applied to an unlimited RU combination manner. In Method 2, the station needs to sequentially read the combination indications in all the user fields, to determine the multi-RU. It should be noted that, the combination indication may be a reserved bit in the user field, or may be a newly added bit.

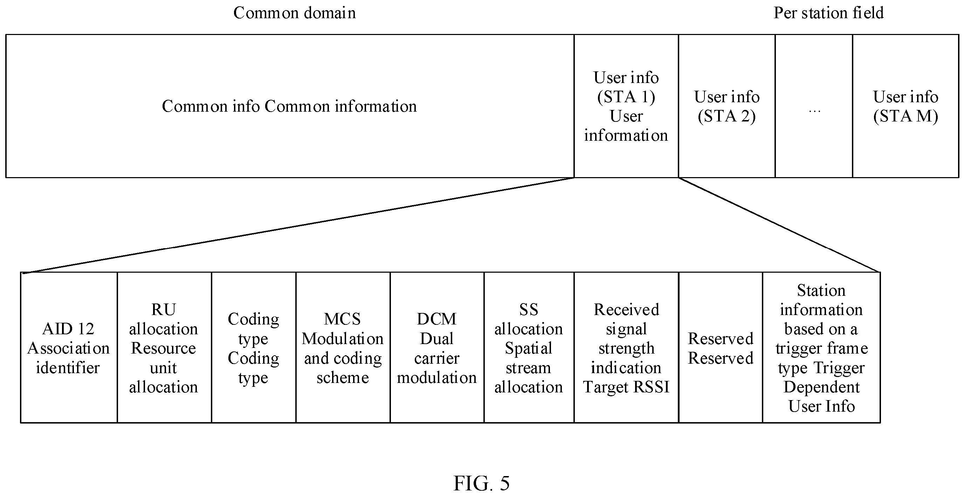

Certainly, in this embodiment of this application, the combination indication may also be applied to a trigger frame (Trigger frame) for scheduling uplink transmission. For example, as shown in FIG. 5, the trigger frame includes a common field and a per station field. The per station field includes a user information field. The user information field includes an association identifier AID 12 subfield that indicates a station, and the resource unit allocation subfield indicates an RU allocated to the station. Optionally, the combination indication may be carried in the user information field of the trigger frame. For example, a user information field 1 indicates the RU 1, and a user information field 2 indicates the RU 2. If Method 1 is used, the user information field 1 may carry the combination indication 1, to indicate to combine the RU 1 and the RU 2. In Method 2, the user information field 1 may carry the combination indication 1, and the user information field 2 may carry the combination indication 2. In this case, the combination indication 1 and the combination indication 2 indicate to combine the RU 1 and the RU 2.

In this embodiment of this application, the signal field carries the combination indication, to indicate the multi-RU. There is high flexibility and a simple implementation.

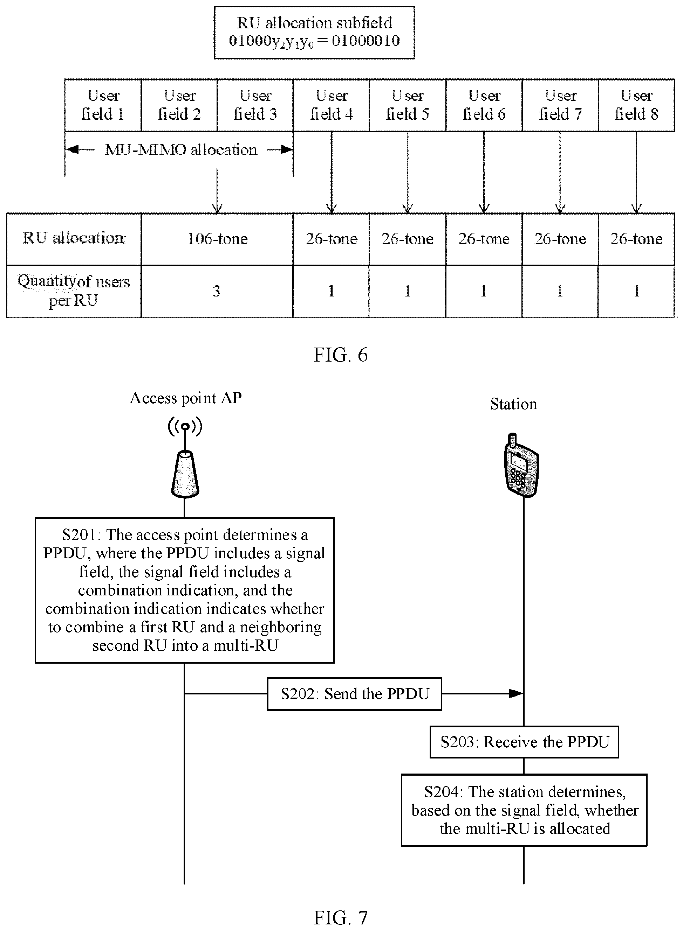

The foregoing describes an implementation of the combination indication. When the multi-RU is allocated to a plurality of users (or stations) to perform MU-MIMO, because a MU-MIMO RU is allocated to a plurality of stations and corresponds to a plurality of user fields, a problem occurs if STA IDs in all user fields corresponding to the multi-RU are simply set to an AID of a same station. For example, as shown in FIG. 6, the resource unit allocation subfield indicates that one 20 MHz channel is divided into [106, 26, 26, 26, 26, 26]. Three users may apply MU-MIMO transmission on a 106-tone RU, and the three users are referred to as MU-MIMO users. Therefore, the 106-tone RU corresponds to three user fields, and the other five 26-tone RUs respectively correspond to five user fields. If a combination of the 106-tone RU and the right neighboring 26-tone RU of the 106-tone RU is the multi-RU, the following problem occurs in Method 1:
1. A specific user whose AID is a STA ID subfield in a user field 4 corresponding to the 26-tone RU needs to be determined.
2. A quantity of MU-MIMO users who use the 26-tone RU needs to be determined. Whether all the three users corresponding to the left 106-tone RU or one or two users use the 26-tone RU needs to be determined.
3. If a STA ID subfield in a user field corresponding to the 26-tone RU is set to a STA ID of one user, in Method 1, other two STAs corresponding to the 106-tone RU do not consider that the 26-tone RU is allocated to the STAs. Consequently, it is difficult to notify a multi-RU allocation status of the other two users.

The following further describes a case in which a multi-RU is allocated to a plurality of users and how to further indicate a specific user who may perform MU-MIMO on the multi-RU in Embodiment 3.

An example in which the multi-RU includes two RUs is used for description. Optionally, the multi-RU includes a first RU (recorded as an RU 1) and a second RU (recorded as an RU 2), and the first RU is a MU-MIMO RU. An access point sends a PPDU. A signal field of the PPDU includes at least two first user fields (recorded as user fields 1) corresponding to the first RU and one second user field (recorded as a user field 2) corresponding to the second RU. The multi-RU is allocated to a plurality of users. A station determines, based on the signal field, the users to which the multi-RU is allocated.

A method for indicating users who may perform MU-MIMO on the multi-RU may include but not limited to the following implementations:

Implementation 1: Because the RU 1 and the RU 2 are combined, and the RU 2 is a right neighboring RU of the RU 1, the second user field includes MU-MIMO transmission information, and the MU-MIMO transmission information indicates the users who perform MU-MIMO transmission on the multi-RU, or indicates specific users who perform MU-MIMO on the multi-RU and who correspond to the RU 1, or indicates a quantity of first-ranked users who perform MU-MIMO on the multi-RU and who correspond to the RU 1.

For example, the MU-MIMO transmission information may be a bitmap, for example, includes 8 bits or 16 bits, to indicate specific users who may perform MU-MIMO on the multi-RU and who correspond to the RU 1. For example, 1010 0000 correspondingly indicates that a first user and a third user who correspond to the RU 1 occupy the multi-MIMO. In this method, it may indicate that some users in the users corresponding to the RU 1 perform MU-MIMO transmission on the multi-RU. There is a higher degree of flexibility, and redundant bits in a plurality of user fields are fully used. Optionally, the MU-MIMO transmission information may alternatively not be carried in the user field.

Implementation 2: STAs that perform MU-MIMO transmission on the multi-RU are not explicitly indicated, but are agreed on in a protocol.

Optionally, that the users who perform MU-MIMO on the multi-RU are users corresponding to the RU 1 is agreed on in the protocol. For example, as shown in FIG. 6, a first 106-tone RU corresponds to three users (respectively corresponding to a user field 1 to a user field 3, where it is assumed that the user field 1 to the user field 3 are a STA 101 to a STA 103), and the 106-tone RU and a right neighboring 26-tone RU are combined into a multi-RU. In this case, the multi-RU is allocated to the three users (the STA 101 to the STA 103) for MU-MIMO. In this method, no extra signaling needs to be carried, so that signaling overheads can be reduced.

Optionally, that the users who perform MU-MIMO on the multi-RU include a user corresponding to the RU 1 and a user corresponding to another combined RU (the RU 2) is alternatively agreed on in the protocol. For example, as shown in FIG. 6, a first 106-tone RU corresponds to three users (respectively corresponding to a STA 101 to a STA 103), the 106-tone RU and a right neighboring 26-tone RU are combined into a multi-RU, and the 26-tone RU corresponds to one user (for example, a STA 104). In this case, it is agreed that the multi-RU is allocated to the four users (the STA 101 to the STA 104) corresponding to the RU 1 and the RU 2, to perform MU-MIMO.

Optionally, in Embodiment 3, the user field 1 and/or the user field 2 may further include the combination indication in Embodiment 2, so that sizes and locations of at least two RUs in the multi-RU are determined based on the combination indication, and the users who perform MU-MIMO on the multi-RU may be determined with reference to the MU-MIMO transmission information. For example, as shown in FIG. 6, if Implementation 1 is used, the first 106-tone corresponds to three users (respectively corresponding to the STA 101 and the STA 103), at least one of the user field 1 to the user field 3 carries the combination indication, and the combination indication indicates to combine the 106-tone RU and the right neighboring 26-tone RU into the multi-RU. In this case, a user field 4 carries the MU-MIMO transmission information, and the STA 101 to the STA 103 read the combination indication in the user field 1 and the MU-MIMO transmission information in the user field 4, to determine that the 106-tone RU and the right neighboring 26-tone RU are combined into the multi-RU, and determine specific STAs that are in the STA 101 and the STA 103 and that may perform MU-MIMO on the multi-RU. If Implementation 2 is used, the first 106-tone RU corresponds to three users (respectively corresponding to the STA 101 to the STA 103), the 26-tone RU corresponds to one user (for example, the STA 104), at least one of the user field 1 to the user field 3 carries the combination indication, and the combination indication indicates to combine the 106-tone RU and the right neighboring 26-tone RU into a multi-RU. In this case, the STA 101 to the STA 104 determines that the 106-tone RU and the right neighboring 26-tone RU are combined into the multi-RU, and the STA 101 to the STA 104 may perform MU-MIMO on the multi-RU.

A multi-RU indication method is designed in Embodiment 4. Some special values of a resource unit allocation subfield are used, and a combination indication is used, so that a quantity of user fields can be reduced, signaling overheads are reduced, and there is a simple implementation and good compatibility. As shown in FIG. 7, the method includes the following steps.

S201: An access point determines a PPDU, where the PPDU includes a signal field, the signal field includes a combination indication, and the combination indication indicates whether to combine a first RU and a neighboring second RU into a multi-RU.

The signal field further includes a resource unit allocation subfield, the resource unit allocation subfield indicates sizes and locations of a plurality of allocated RUs on one 20 MHz channel, and the plurality of RUs include the first RU.

The resource unit allocation subfield indicates that the corresponding 20 MHz channel is divided into any one of the following: [106, -, 52, 52], [52, 52, -, 106], [106, -, 106], or [52, 52, -, 52, 52], and "-" indicates that a center 26-tone RU is not allocated. The second RU is the center 26-tone RU, and the first RU is a 106-tone RU or a 52-tone RU neighboring to the center 26-tone RU.

The resource unit allocation subfield indicates that the corresponding 20 MHz channel is divided into any one of the following: [26, 26, 26, 26, -, 106], [26, 26, 52, -, 106], [52, 26, 26, -, 106], [106, -, 26, 26, 26, 26], [106, -, 52, 26, 26], or [106, -, 26, 26, 52], the second RU is a center 26-tone RU, and the first RU is a 106-tone RU neighboring to the center 26-tone RU.

The signal field further includes a user field corresponding to the first RU, the signal field does not include a user field corresponding to the second RU, and at least one user field corresponding to the first RU includes the combination indication.

If the combination indication indicates to combine the first RU and the second RU into the multi-RU, the multi-RU is allocated to a user indicated by the user field corresponding to the first RU.

Optionally, the first RU may be a 106-tone RU or a 52-tone RU, and the 106-tone RU may be allocated to one or more users. When the 106-tone RU is allocated to a plurality of users, the first RU corresponds to the plurality of user fields, and the first RU may be referred to as a MU-MIMO RU. In this case, the multi-RU is allocated to the plurality of users corresponding to the first RU.

Optionally, the combination indication includes 1 bit; that a first value is used as a value of the combination indication is used to indicate not to combine the first RU and the neighboring second RU; and that a second value is used as a value of the combination indication is used to indicate to combine the first RU and the neighboring second RU.

Optionally, the combination indication includes 2 bits; that a first value is used as a value of the combination indication is used to indicate not to combine the first RU and the neighboring second RU; that a second value is used as a value of the combination indication is used to indicate to combine the first RU and a left neighboring second RU; and that a third value is used as a value of the combination indication is used to indicate to combine the first RU and a right neighboring second RU.

S202: The access point sends the PPDU.

S203: A station receives the PPDU.

S204: The station determines, based on the signal field, whether the multi-RU is allocated. Optionally, if it is determined that the multi-RU is allocated, the station obtains data carried on the multi-RU.

Optionally, the combination indication may be carried in any user field corresponding to the first RU. For an implementation method of the combination indication, refer to Implementation 1 to Implementation 5 provided in Embodiment 2.

Optionally, the PPDU further includes a data field. If the combination indication indicates to perform combination, it indicates to combine the first RU and the second RU into the multi-RU, and the data field includes the data carried on the multi-RU.

In a possible implementation, the resource unit allocation subfield that has some special values and that is specified in the 802.11ax standard and the combination indication are combined, to indicate the multi-RU.

For example, as shown in Table 1, if the access point divides the 20 MHz channel into [106, 26, 52, 52], based on a design principle of the resource unit allocation subfield and the user field in existing 802.11ax, the access point needs to set the resource unit allocation subfield to 01000y2y 1y0, and the signal field includes one user field corresponding to the 26-tone RU. In an example of this embodiment of this application, the access point may combine the 106-tone RU and the 26-tone RU in [106, 26, 52, 52] into one multi-RU. The access point may set the resource unit allocation subfield to 00011y2y1y0 based on 802.11ax, to indicate that the 20 MHz channel is divided into [106, -, 52, 52]. Herein, "-" indicates that one 26-tone RU is not allocated, the signal field does not include a user field of the 26-tone RU, the signal field includes at least one user field corresponding to the 106-tone RU, and the at least one user field carries the combination indication. Therefore, after reading 00011y2y1y0, a station supporting 802.11ax considers that one right neighboring 26-tone RU is not allocated, and the signal field does not include a user field corresponding to the RU. Therefore, the station in 802.11ax can accurately obtain an RU allocation status of the station. However, if a station supporting a new standard (for example, 802.11be) determines that the resource unit allocation subfield is 00011y2y1y0 and the combination indication indicates to perform combination, the station supporting the new standard determines that the 106-tone RU and the right neighboring 26-tone RU are combined. If the resource unit allocation subfield is 00011y2y1y0 and the combination indication indicates not to perform combination, the station supporting the new standard determines that the 106-tone RU and the right neighboring 26-tone RU are not combined. In other words, the 26-tone RU is not allocated either.

Based on a similar principle, it can be understood that the resource unit allocation subfield that has several special values shown in Table 2 may also be used to indicate the multi-RU.

**Table 2**

| Resource unit allocation subfield (B7, B6, B5, B4, B3, B2, B1, and B0) | #1 | #2 | #3 | #4 | #5 | #6 | #7 | #8 | #9 | Quantity of entriesEntry |
|---|---|---|---|---|---|---|---|---|---|---|
| 00010y₂y₁y₀ | 52 | | 52 | | - | 106 | | | | 8 |
| 00011y₂y₁y₀ | 106 | | | | - | 52 | | 52 | | 8 |
| 0110y₁y₀z₁z₀ | 106 | | | | - | 106 | | | | 16 |
| 01110000 | 52 | | 52 | | - | 52 | | 52 | | 1 |

For example, as shown in Table 2, the access point may set the resource unit allocation subfield in the signal field to 01110000, to indicate that the 20 MHz channel is divided into [52, 52, -, 52, 52]. Herein, "-" indicates that a 26-tone RU is not allocated, and the signal field does not include a user field of the 26-tone RU. If a combination indication in a user field corresponding to a second 52-tone RU in the signal field indicates to perform combination, the station supporting the new standard may determine that the second 52-tone RU and a right neighboring 26-tone RU of the second 52-tone RU are combined. Further, the station obtains data from the multi-RU, and the station in 802.11ax still performs parsing based on an agreement in a protocol in 802.11ax. Details are not described herein.

For another example, the access point may set the resource unit allocation subfield in the signal field to 00010010, to indicate that the 20 MHz channel is divided into [52, 52, -, 106]. The signal field includes a user field 1 corresponding to a first 52-tone RU, a user field 2 corresponding to a second 52-tone RU, and three user fields (a user field 3 to a user field 5) corresponding to a 106-tone RU. A combination indication in at least one of the user field 3 to the user field 5 indicates to perform combination. In this case, the station supporting the new standard may determine that the 106-tone RU and a left neighboring 26-tone RU are combined into one multi-RU. Optionally, the station supporting the new standard may further determine that the multi-RU corresponds to three user fields (the user field 3 to the user field 5), and is allocated to three users (or stations). Further, the stations obtain data from the multi-RU.

In this manner, when the multi-RU is allocated to a plurality of users, it may be agreed that users who perform MU-MIMO on the multi-RU are users corresponding to the MU-MIMO RU.

In this implementation, the station supporting 802. 11ax may be compatible, to indicate the multi-RU. Further, the users who perform MU-MIMO on the multi-RU may be simply determined. There is a low degree of complexity. In addition, a special value of the resource unit allocation subfield and the combination indication are combined, to reduce signaling overheads.

Further, some reserved values of the resource unit allocation subfield in 802.11ax may be further re-designed and re-defined, and then the combination indication is further used, to indicate more combinations of a plurality of RUs.

Some reserved values in Table 1 are shown in Table 3. The following six resource unit allocation subfields and the combination indication jointly indicate a multi-RU combination. Reserved values are 011101x₁x₀, 01111y₂y₁y₀, 11011y₂y₁y₀, and 111x₄x₃x₂x₁x₀. A correspondence between each reserved value and a multi-RU combination is not limited, and may be flexibly designed.

**Table 3**

| Resource unit allocation subfield (B7, B6, B5, B4, B3, B2, B1, and B0) | #1 | #2 | #3 | #4 | #5 | #6 | #7 | #8 | #9 | Quantity of entries |
|---|---|---|---|---|---|---|---|---|---|---|
| Reserved value | 26 | 26 | 26 | 26 | - | 106 | | | | 8 |
| Reserved value | 26 | 26 | 52 | | - | 106 | | | | 8 |
| Reserved value | 52 | | 26 | 26 | - | 106 | | | | 8 |
| Reserved value | 106 | | | | - | 26 | 26 | 26 | 26 | 8 |
| Reserved value | 106 | | | | - | 26 | 26 | 52 | | 8 |
| Reserved value | 106 | | | | - | 52 | | 26 | 26 | 8 |

In this embodiment of this application, some special values of the resource unit allocation subfield and the combination indication are used to indicate the multi-RU combination, so that one user field can be reduced, signaling overheads are reduced, and there is a simple implementation and good compatibility. In addition, in this method, it may be determined that the users who perform MU-MIMO transmission on the multi-RU are users of the MU-MIMO RU, and the foregoing problem does not exist.

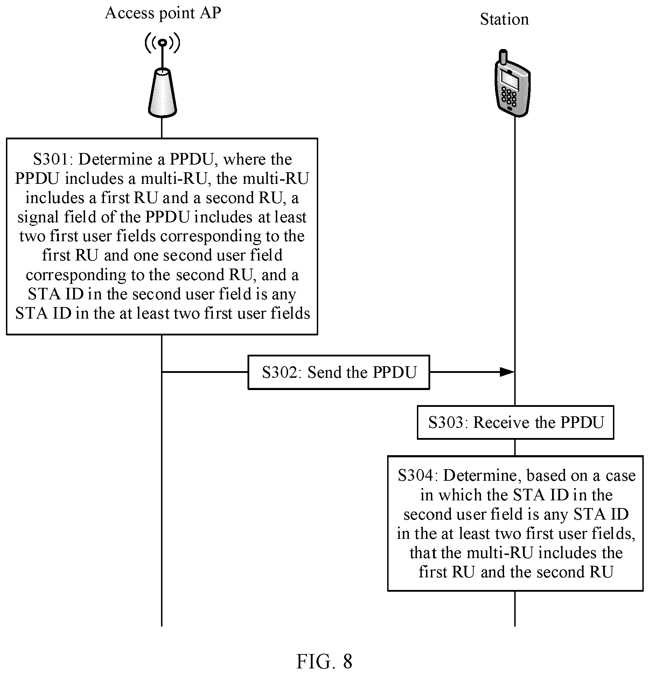

Embodiment 5 describes another method for indicating, when a multi-RU is allocated to a plurality of users, the multi-RU and STAs that may perform MU-MIMO on the multi-RU. The method shown in FIG. 8 includes the following steps.

S301: Determine a PPDU, where the PPDU includes a multi-RU, the multi-RU includes a first RU and a second RU, a signal field of the PPDU includes at least two first user fields corresponding to the first RU and one second user field corresponding to the second RU, and a STA ID in the second user field is any STA ID in the at least two first user fields.

When an access point sends the PPDU, if a combination of the first RU and the second RU is used for data transmission, the access point may set the STA ID in the second user field to any STA ID in the at least two first user fields. Optionally, the first RU corresponds to at least two user fields, and is a MU-MIMO RU.

S302: Send the PPDU.

S303: A station receives the PPDU.

S304: Determine, based on a case in which the STA ID in the second user field is any STA ID in the at least two first user fields, that the multi-RU includes the first RU and the second RU.

Optionally, the station further determines that users who perform MU-MIMO on the multi-RU are users corresponding to the at least two first user fields.

Optionally, the second user field may further include other information, for example, MU-MIMO transmission information, to indicate specific users who perform MU-MIMO on the multi-RU and who correspond to the at least two first user fields. For an implementation thereof, refer to Embodiment 3. Further, the station may determine, based on the MU-MIMO transmission information, whether the station performs MU-MIMO transmission on the multi-RU. For example, if the station determines that the station cannot perform MU-MIMO on the multi-RU, the station may perform MU-MIMO only on the first RU; or if the station determines that the station can perform MU-MIMO on the multi-RU, the station performs MU-MIMO on the multi-RU.

Optionally, a combination indication is not required in this embodiment of this application. It is specified that the station needs to read the at least two first user fields corresponding to the first RU, and further needs to read the second user field corresponding to the second RU. If the STA ID in the second user field is the same as any STA ID in the at least two first user fields, the station may determine that the first RU and the second RU are combined. Further, the station may further determine that the users who perform MU-MIMO on the multi-RU are the users corresponding to the at least two first user fields. Optionally, the STA ID in the second user field is the same as a STA ID in a 1^{st} user field in the at least two first user fields, and a STA corresponding to the 1^{st} user field may be considered as a group representative. After reading the ID of the group representative, another station may store the STA ID of the group representative. If a STA ID in another user field is the same as the STA ID of the group representative, it is considered that an RU corresponding to the another user field is combined with the RU corresponding to the station. Certainly, a STA corresponding to a first user field other than the 1^{st} first user field in the at least two first user fields may also be used as a group representative. An implementation thereof is similar. Details are not described.

Optionally, locations of the first RU and the second RU may be preset. For example, 20 MHz is divided into [106, 26, 26, 26, 26, 26], and the locations of the first RU and the second RU are a first 106-tone RU and one right neighboring 26-tone RU, or preset locations of the first RU and the second RU are a 106-tone RU and a second 26-tone RU. The preset location may be agreed on in a protocol, or may be negotiated in advance between the access point and the station. This is not limited in this application.

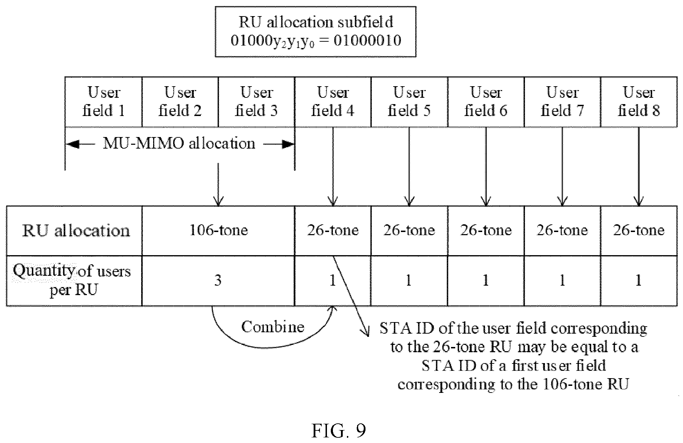

For example, as shown in FIG. 9, 20 MHz is divided into [106, 26, 26, 26, 26, 26]. A 106-tone RU corresponds to a user field 1 to a user field 3 (for example, the user field 1 to the user field 3 respectively carry an ID of a STA 101, an ID of a STA 102, and an ID of a STA 103), a right neighboring 26-tone RU of the 106-tone RU corresponds to a user field 4 (which carries the ID of the STA 101), and the STA 101, the STA 102, and the STA 103 may read the user field 1 to the user field 4. For example, the STA 101 learns, through reading, that both the user field 1 and the user field 4 carry the ID of the STA 101. In this case, the STA 101 determines that the 106-tone RU and the right neighboring 26-tone RU are combined, and may determine that the multi-RU is allocated to the STA 101 to the STA 103 for MU-MIMO transmission. The STA 102 reads the user field 1 to the user field 4, stores the ID of the STA 101 in the user field 1 corresponding to the 106-tone RU, and learns, through reading, that the user field 2 carries the STA ID of the STA 102 and that the user field 4 carries the ID of the STA 101. In this case, the STA 102 may also determine that the 106-tone RU and one right neighboring 26-tone RU are combined into one multi-RU, and may determine that the multi-RU is allocated to the STA 101 to the STA 103 for MU-MIMO transmission. The STA 103 and the STA 102 perform similar processing. Details are not described herein.

The foregoing example shows a case in which the 106-tone RU is on a left side of 20 MHz. It can be understood that a case in which the 106-tone RU is on a right side of 20 MHz is similar. A difference lies in that the station first reads the second user field and then reads the first user field. A method in which the station determines a multi-RU is similar to the foregoing method. Details are not described herein again.

In addition, although in the example shown in FIG. 9, the multi-RU includes the 106-tone RU and a neighboring 26-tone RU of the multi-RU. Actually, the method in this embodiment of this application is also applicable to a case of combining RUs that are not neighboring to each other. For example, it may be specified that the multi-RU has another preset location or has no preset location. In addition, in the example shown in FIG. 9, the 106-tone RU and the 26-tone RU are located on a same 20 MHz channel. Certainly, the method in this embodiment may also be applied to a case of combining RUs across 20 MHz channels. In other words, the 106-tone RU and the 26-tone RU are located on different 20 MHz channels. For a combination of RUs at preset locations, the station only needs to read, based on the preset locations, user fields corresponding to the RUs, but does not need to read all fields. For a combination of RUs whose locations are not preset, the station needs to read user fields one by one in a sequence, to determine the multi-RU. The method in this embodiment of this application is not only applicable to a combination of two RUs, but certainly, is also applicable to a combination of more than two RUs. A principle thereof is similar.

Embodiment 5 of this application describes a method in which a bit of a combination indication is not required, and only a STA ID in a user field needs to be modified. An implementation of the method is simple, and there is good compatibility.

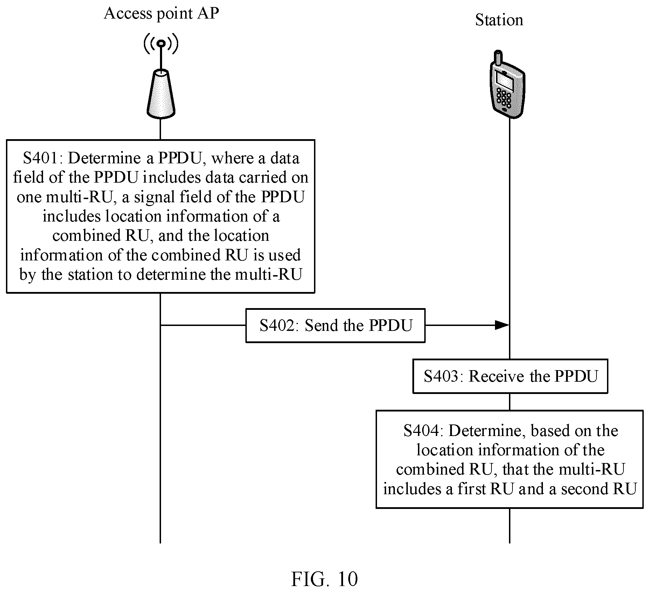

Embodiment 6 describes still another multi-RU indication method. Location information of a combined RU is carried, to indicate a multi-RU. There is higher flexibility. A location of the multi-RU does not need to be limited. This method is applicable to both a limited combination manner and an unlimited combination manner. As shown in FIG. 10, the following steps are performed.

S401: Determine a PPDU, where a data field of the PPDU includes data carried on one multi-RU, a signal field of the PPDU includes the location information of the combined RU, and the location information of the combined RU is used by a station to determine the multi-RU.

The multi-RU includes a first RU and a second RU, and the signal field of the PPDU includes at least two first user fields corresponding to the first RU and one second user field corresponding to the second RU.

Optionally, the second user field includes the location information of the combined RU, and the location information of the combined RU is used to indicate a location of the first RU. Alternatively, the first user field includes the location information of the combined RU, and the location information of the combined RU is used to indicate a location of the second RU. Alternatively, the signal field includes the location information of the combined RU.

Optionally, the first RU is allocated to a plurality of users, and is a MU-MIMO RU. Optionally, the first RU may be an RU greater than or equal to a 106-tone RU. For example, the first RU may be a 106-tone RU, a 242-tone RU, a 484-tone RU, or a 996-tone RU.

S402: Send the PPDU.

S403: The station receives the PPDU.

S404: Determine the multi-RU based on the location information of the combined RU.

The location information of the combined RU may be carried in a plurality of manners, including but not limited to:

Manner 1: The second user field carries the location information of the combined RU, and the location information of the combined RU indicates the location of the first RU. The station determines, based on the location information of the combined RU, that the first RU and the second RU are combined.

For Manner 1, there are the following cases:

Case 1: The second RU is located on the left of the first RU. In this case, the second user field is located on the left of the at least two first user fields, and the second user field carries the location information of the combined RU. When the STA learns, through reading, that the second user field carries a STA ID of the STA and the location information that is of the combined RU and that indicates the first RU, the STA determines that the first RU and the second RU are combined into the multi-RU, and further parses the data carried on the multi-RU.

Case 2: The second RU is located on the right of the first RU. In this case, the second user field is located on the right of the at least two first user fields (in other words, the second user field is located after the at least two first user fields), and the second user field carries the location information of the combined RU and a combination indication. The STA first learns, through reading, that the first user field carries the STA ID of the STA, and determines that the first RU is allocated to the STA. Further, the station further continues to read a subsequent user field. If the STA learns, through reading, that the combination indication in the second user field indicates to perform combination, and an RU indicated by the location information of the combination RU is the first RU, the STA determines that the first RU and the second RU are combined into the multi-RU, and further parses the data carried on the multi-RU.

Manner 2: The first user field carries the location information of the combined RU, and the location information of the combined RU indicates the location of the second RU. The station determines, based on the location information of the combined RU, that the multi-RU includes the first RU and the second RU.

For example, the second RU is located on the right of the first RU, the second user field is located on the right of the at least two first user fields (in other words, the second user field is located after the at least two first user fields), and the first user field carries the location information of the combined RU. When the STA learns, through reading, that the first user field carries the STA ID of the STA and the location information that is of the combined RU and that indicates the second RU, the STA determines that the first RU and the second RU are combined into the multi-RU, to parse the data carried on the multi-RU.

Manner 3: The signal field includes the location information of the combined RU, and the location information of the combined RU may be used to indicate the first RU and the second RU that are included in the multi-RU. The station determines, based on the location information of the combined RU, sizes and locations of the first RU and the second RU that are included in the multi-RU, to parse the data carried on the multi-RU.

Optionally, the location information of the combined RU is located in a newly added field of the signal field, and the newly added field may be located before the first user field and the second user field. In an example, the newly added field is a special user field, and indicates to combine the first RU and the second RU. To avoid an error in a reading sequence and a location of a subsequent user field, a quantity of first user fields needs to be one greater than an actual quantity of users. For example, 20 MHz is divided into [106, 26, 26, 26, 26, 26], and the 106-tone RU corresponds to three users. One user field may be added to the signal field. Therefore, the 106-tone RU corresponds to four user fields. The additional user field may carry location information of the first RU and location information of the second RU. In another example, the newly added field is another field before a user specific field, and may also be referred to as a location information field, or the like. This is not limited.

Further, the location information of the combined RU has the following several specific implementations:

Implementation 1: The location information of the combined RU is a bitmap, where 1 bit corresponds to one RU. For example, if one 20 MHz channel is divided into a maximum of nine RUs, the location information of the combined RU may be 9 bits or 8 bits, and indicates combined RUs on the 20 MHz channel, to indicate the multi-RU. For example, the 20 MHz channel is divided into: [106, 26, 26, 26, 26, 26], the location information of the combined RU is 9 bits, a value of the 9 bits is 110000000, and 110000000 indicates to combine the 106-tone RU and a neighboring 26-tone RU into one multi-RU.

Implementation 2: The location information of the combined RU includes a plurality of bits, any value of the plurality of bits corresponds to one RU on the 20 MHz channel, and the combination indication may be carried in a user field. For example, the combination indication is carried in any first user field. The combination indication is 4 bits or 3 bits, and indicates a location of the second RU on the 20 MHz channel. Because the first RU and an RU other than the first RU may be combined into a multi-RU, a maximum of eight RUs may be combined within 20 MHz, and 3 bits may also be used to indicate the location information of the combined RU.

Implementation 1 and Implementation 2Method 1 and Method 2 may be applied to a case in which the multi-RU is located on a same 20 MHz channel.

Implementation 3: The location information of the combined RU includes a plurality of bits, some bits are used to indicate a 20 MHz channel on which the combined RU is located, and the other bits are used to indicate a specific RU that is the combined RU and tht is on the 20 MHz channel. For example, the location information of the combined RU includes 8 bits, the location information of the combined RU is located in the second user field, and the 4 bits indicate a specific channel that is in an entire channel and that is a 20 MHz channel on which the first RU combined with the second RU is located. If a bandwidth of the entire channel is 320 MHz, 4 bits may be used to indicate the location information of the combined RU, and the other 4 bits indicate a specific RU that is the first RU and that is on the 20 MHz channel, to indicate the first RU.

Implementation 4: The location information of the combined RU includes a plurality of bits, and a value of the plurality of bits indicates a specific RU that is the combined RU and that is on a 320 MHz channel. For example, the location information of the combined RU includes 9 bits, 2 bits are used to indicate a specific 80 MHz channel on which the combined RU is located and that is on the 320 MHz channel, and the other 7 bits are used to indicate a specific RU that is the combined RU and that is on the 80 MHz channel. Optionally, for an indication of the 7 bits, refer to a design of B12 to B19 in a user information field in a trigger frame in existing 802.11ax. The 320 MHz channel may include four 80 MHz channels, or may include two 80 MHz channels and one 160 MHz channel, or may include two 160 MHz channels, or may include one 240 MHz channel and one 80 MHz channel.

Implementation 3 and Implementation 4 may be applied to any case in which a plurality of RUs within 320 MHz are combined.

It should be noted that, there is a correspondence between a location of an RU on a 20 MHz channel and a location of each user field in a user specific field. In other words, the location information of the combined RU indicates a location of a user field of the combined RU.

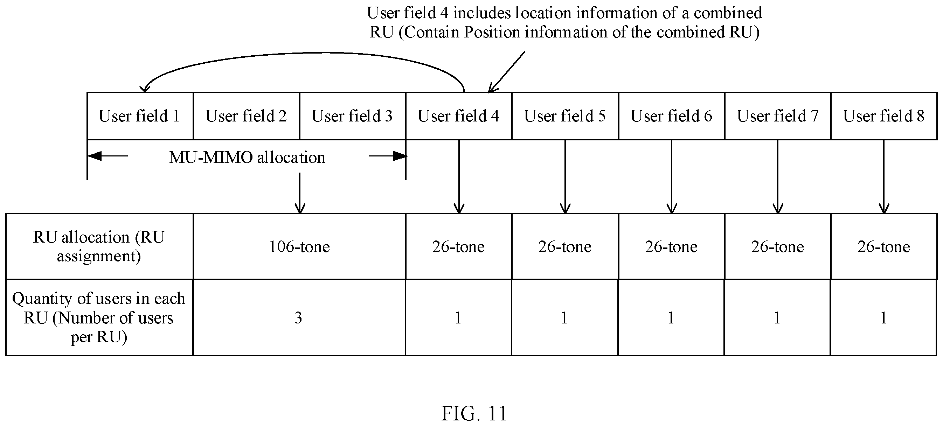

Optionally, the user field may further include the combination indication. For a detailed description of the combination indication, refer to the foregoing embodiment. For example, as shown in FIG. 11, a user field 1 to a user field 3 respectively correspond to a STA 101 to a STA 103, and a user field 4 includes the combination indication. For example, the combination indication in the user field 4 is a special STA ID or another implementation (referring to Embodiment 2), and indicates that the 26-tone RU is a combined RU. The user field 4 further includes location information indicating the 106-tone RU. The STA 101 to the STA 103 may determine, based on the combination indication and the location information, that the multi-RU is (106+26). Certainly, the combination indication may not be included, but the location information of the combined RU is used to implement functions of both the combination indication and a location indication. For example, if the location information 9 bits of the combined RU is set to a specific value, for example, a special location value (for example, 000000000), it indicates that no RU is combined. If the 9 bits have another value, a location of the combined RU is indicated.

The method in this embodiment of this application is not only applicable to a case in which the multi-RU is allocated to one user, but also applicable to a case in which the multi-RU is allocated to a plurality of users. This is not limited in this application. Optionally, the second user field may further include MU-MIMO transmission information. Optionally, it may be further agreed, in a protocol, that users who perform MU-MIMO on the multi-RU are a plurality of users corresponding to the first RU. Refer to Implementation 1 and Implementation 2 in Embodiment 3. Details are not described herein again.

Embodiment 7 provides yet another multi-RU indication method. In addition, users to which a multi-RU is allocated are indicated. In this embodiment, a combination of large-size RUs is mainly described. A difference between a combination of small-size RUs and a combination of large-size RUs during MU-MIMO needs to be noted. For the small-size RU, a quantity of users who perform MU-MIMO is mainly notified based on a single RU allocation subfield, but for the large-size RU, a quantity of users who perform MU-MIMO is notified based on a plurality of RU allocation subfields. For example, if one multi-RU includes one 242-tone RU and another 242-tone RU, the two 242-tone RUs involve two resource unit allocation subfields. An access point determines a PPDU. The PPDU includes a signal field. The access point sends the PPDU.

Methods for indicating the multi-RU and the users using the multi-RU may include but are not limited to the following methods:
Method 1: The signal field includes at least one first user field (a user field 1) corresponding to a first RU and at least one second user field (a user field 2) corresponding to a second RU, and the first RU and the second RU are combined into a multi-RU. It is assumed that a quantity of user fields 1 is the same as a quantity of user fields 2, and STA IDs in the user fields 1 are sequentially the same as STA IDs in the user fields 2. For example, the multi-RU is (242 + 242), a value of a resource unit allocation subfield 1 corresponding to a first 242-tone RU is 11000001 and corresponds to two user fields 1, a value of a resource unit allocation subfield 2 corresponding to a second 242-tone RU is also 11000001 and corresponds to two user fields 2, and STA IDs in the two user fields 1 are sequentially the same as STA IDs in the two user fields 2. Optionally, at least one of the two user fields 1 or the two user fields 2 may further include a combination indication, and the combination indication indicates to combine an RU and another RU. After reading the STA ID and the combination indication in the user field 1, a station corresponding to the user field 1 may determine that the multi-RU is (242+242) and is allocated to two users.
   Certainly, the multi-RU may alternatively be (242+484). In this case, a value of a resource unit allocation subfield 1 is 11000001 and also corresponds to two user fields 1, a value of a resource unit allocation subfield 2 is 11001001 and corresponds to two user fields 2, and STA IDs in the two user fields 1 are the same as STA IDs in the two user fields 2. Another example is not described again.
Method 2: The access point determines the PPDU. The PPDU includes the signal field, the signal field includes N first user fields (user fields 1) corresponding to a first RU, and N is greater than or equal to 1. The multi-RU includes the first RU and a second RU. A first resource unit allocation subfield indicates that the first RU corresponds to N user fields 1, and a second resource unit allocation subfield indicates that the second RU is empty (corresponding to zero users, where the second RU is not allocated). In addition, at least one user field carries a combination indication. A station determines, based on the foregoing information, that the multi-RU includes the first RU and the second RU, and is allocated to N users. Optionally, a value of the second resource unit allocation subfield may be 0111000, 01110010, or 01110011. According to this method, a quantity of user fields is reduced, so that signaling overheads are reduced, and there is a simple implementation.
Method 3: The access point determines the PPDU. The PPDU includes the signal field, and the signal field includes N first user fields (user fields 1) corresponding to a first RU and one second user field (a user field 2) corresponding to a second RU. The multi-RU includes the first RU and the second RU. Optionally, a user field may further carry a combination indication, and the combination indication indicates to combine the first RU and the second RU. Optionally, the combination indication may be implemented in Method 1 and Method 2 described in Embodiment 2. Further, users to which the multi-RU is allocated may be determined in a manner similar to the manner in Embodiment 3.

For example, the multi-RU is (242+484), a resource unit allocation subfield 1 indicates that a 242-tone RU is allocated to six users, six user fields 1 indicate the six users, and a resource unit allocation subfield 2 indicates that a 484-tone RU corresponds to one user field 2. Optionally, the user field 2 carries a STA ID in a 1^{st} user field 1 or carries a special STA ID, to indicate to combine the 484-tone RU and the 242-tone RU. Further, the station may further determine that the multi-RU is allocated to the six users corresponding to the six user fields 1. If the STA ID in the user field 2 is an ID of another station, the station may also determine that the multi-RU is allocated to users corresponding to seven user fields. Optionally, the user field 2 may further carry MU-MIMO transmission information (as described in Embodiment 3). In this case, the station may determine, based on the MU-MIMO transmission information, users to which the multi-RU is allocated.

For another example, combination information in the user field 2 may alternatively be a 16-bit combination bitmap, and each bit corresponds to one 242-tone RU. In this case, the 16 bits may indicate a combination status of large-size RUs on a 320 MHz channel. After the combination information is represented in this manner, the multi-RU may be determined based on the information. If a quantity of RUs included in the multi-RU is greater than 2, and a value of the 16 bits may be 1001 1111 0000 0000, it may be determined, with reference to a resource unit allocation subfield, that the multi-RU is (242+242+996). In this case, a resource unit allocation subfield corresponding to a third RU and a subsequent RU may indicate that the RU is empty (corresponding to zero users), and the signal field does not include a user field corresponding to the third RU and the subsequent RU, to reduce a quantity of user fields.

For still another example, the user field 1 may carry the combination indication, and the combination indication may be implemented in Implementation 1, Implementation 4, Implementation 5, and Method 2 in Embodiment 2.

For example, as shown in Table 4, a common combination within 80 MHz is as follows:

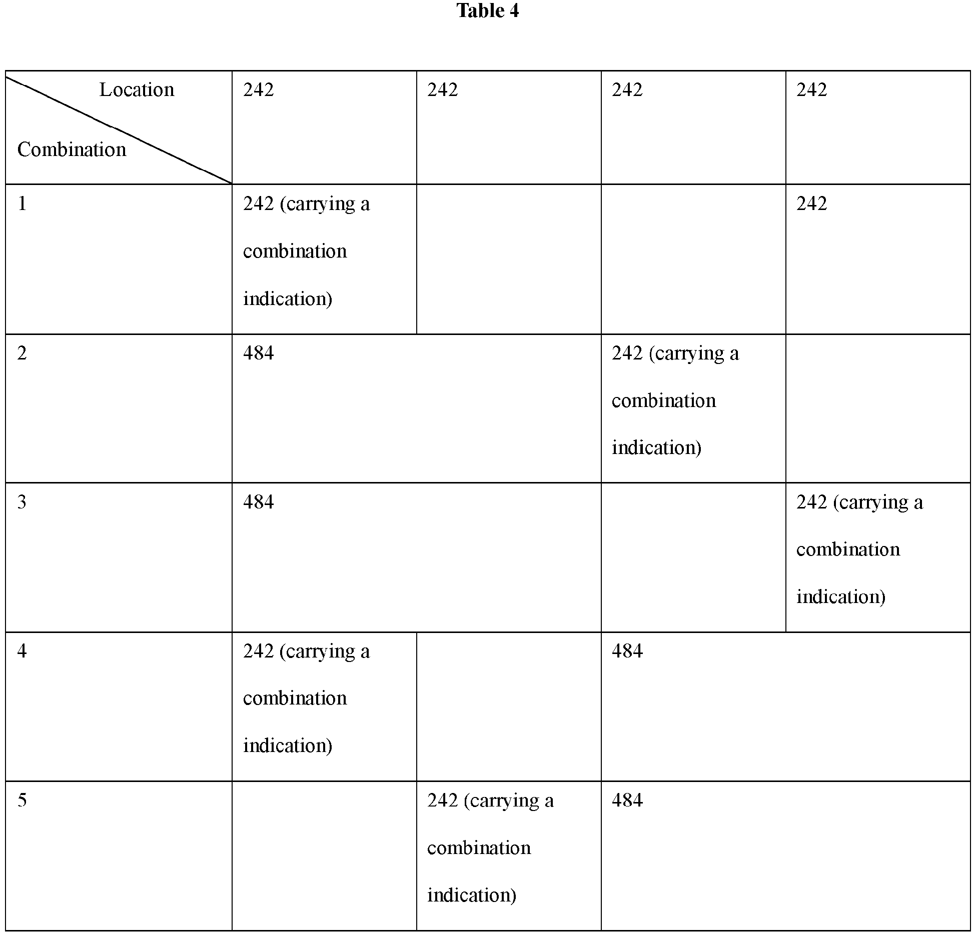

One row represents one combination, the first row represents that the multi-RU includes a first 242-tone RU and a fourth 242-tone RU, and a user field 1 corresponding to the first 242-tone RU may carry the combination indication, to indicate to combine the 242-tone RU and the fourth 242-tone RU. The combination indication may be 1 bit, or may be a plurality of bits. Details are not described.

For example, as shown in Table 5, when a size of an RU is greater than 80 MHz and is less than or equal to 160 MHz, in a combination indication method, some combinations may be represented with reference to a location of the 484-tone RU and whether to perform combination.

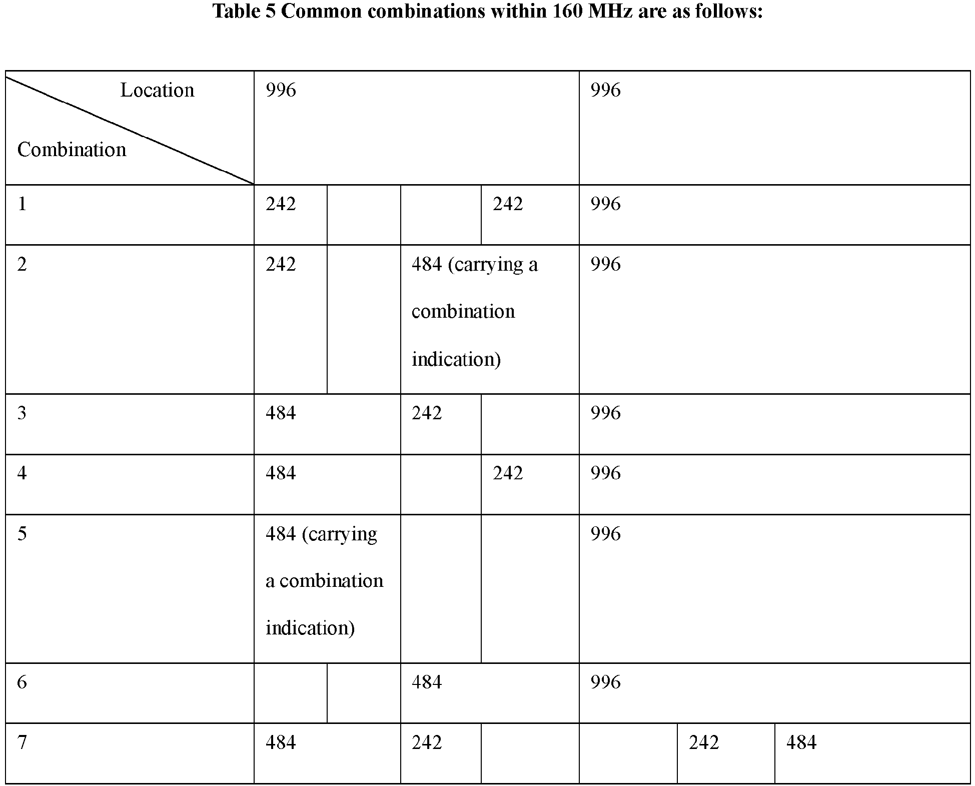

In the second row and the fifth row, the multi-RU includes a 484-tone RU and a 996-tone RU. A user field corresponding to the 484-tone RU may carry the combination indication, to indicate to combine the 484-tone RU and the 996-tone RU. The combination indication may be 1 bit, or may be a plurality of bits. Reference is made to Embodiment 2. Details are not described.

Table 6 shows a combination of 996-tone RUs, and the combination indication may be carried in a user field corresponding to a 996-tone RU shown in the following table.

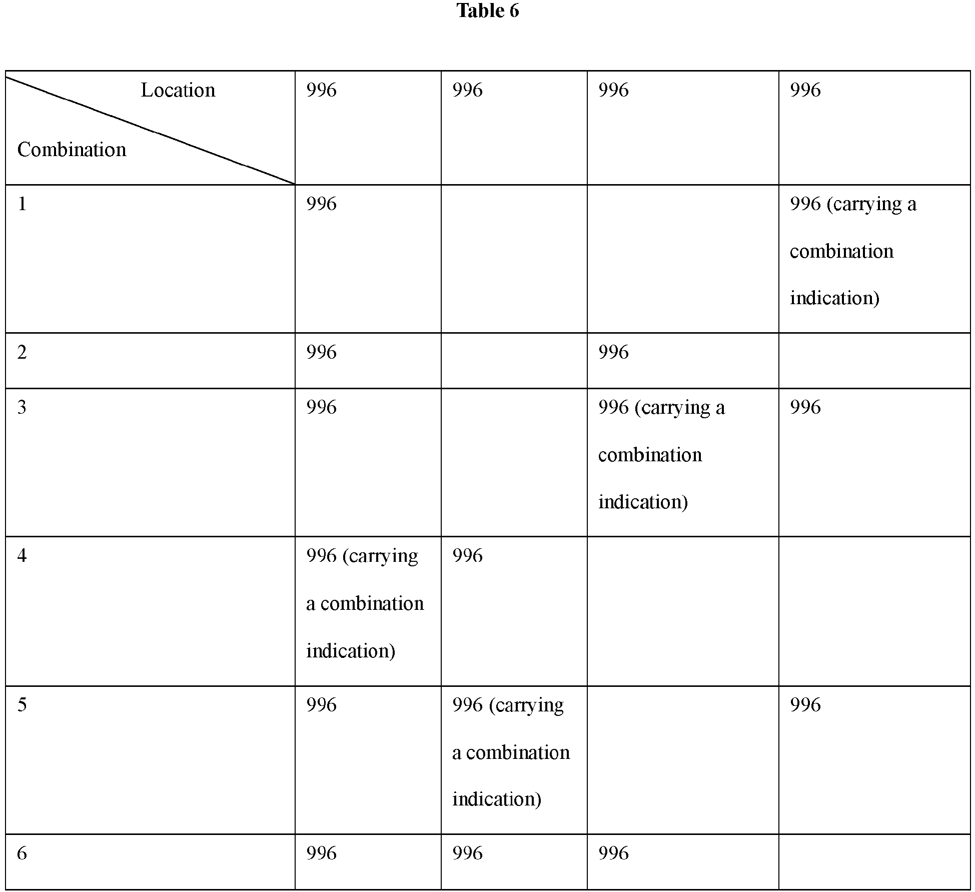

It should be noted that a one-bit combination indication can only indicate a combination status of RUs at preset locations. Certainly, the combination indication may further include more bits, for example, may be 2 bits, and the 2 bits may indicate more combination status of RUs at preset locations.

Certainly, the method in this embodiment of this application may also be applied to a trigger frame (Trigger frame) for scheduling uplink transmission. For example, as shown in FIG. 5, the trigger frame includes a common field and a per station field. The per station field includes a user information field. The user information field includes an association identifier AID12 subfield that indicates a station, and the resource unit allocation subfield indicates an RU allocated to the station. Optionally, the combination indication may be carried in the user information field of the trigger frame. For example, similar to Method 1 in Embodiment 7, the multi-RU is (242+242), a first 242-tone RU is allocated to three users and corresponds to a user information field 1 to a user information field 3, and a second 242-tone RU corresponds to a user information field 4 to a user information field 6. Therefore, AID12 subfields in the user information field 4 to the user information field 6 may be sequentially the same as AID subfields in the user field 1 to the user field 3, and it may be determined that the multi-RU is allocated to the three users for use. For another example, similar to Method 3 in Embodiment 7, the multi-RU is (242+242), a first 242-tone RU is allocated to three users and corresponds to a user information field 1 to a user information field 3, a second 242-tone RU corresponds to only one user information field 4, and an AID 12 field in the user information field 4 is an AID in the user field 1. In this case, it is determined that the multi-RU is allocated to the three users for use. Certainly, the user information field 4 may further carry the MU-MIMO transmission information, and the MU-MIMO transmission information indicates users to which the multi-RU is allocated.

In this embodiment, a combination of large-size RUs is mainly described, and that large-size RUs are combined and then allocated to one or more users for transmission is supported. A combination of a plurality of incontiguous large-size RUs in a large bandwidth can be effectively supported, to improve large-size RU combination flexibility and spectral efficiency. For example, for a next generation of 802.11ax, for example, 802.11be, some 20 MHz channels on the 320 MHz channel are unavailable. Consequently, available 20 MHz channels are incontiguous. In this case, the 802.11ax protocol is used, and only a plurality of contiguous 20 MHz channels can be allocated to one or more users for use. The some 20 MHz channels that are incontiguous may be wasted. However, in the method in this embodiment, incontiguous large-size RUs may be combined into a multi-RU and then allocated to one or more users for use, to improve spectral efficiency of a system.

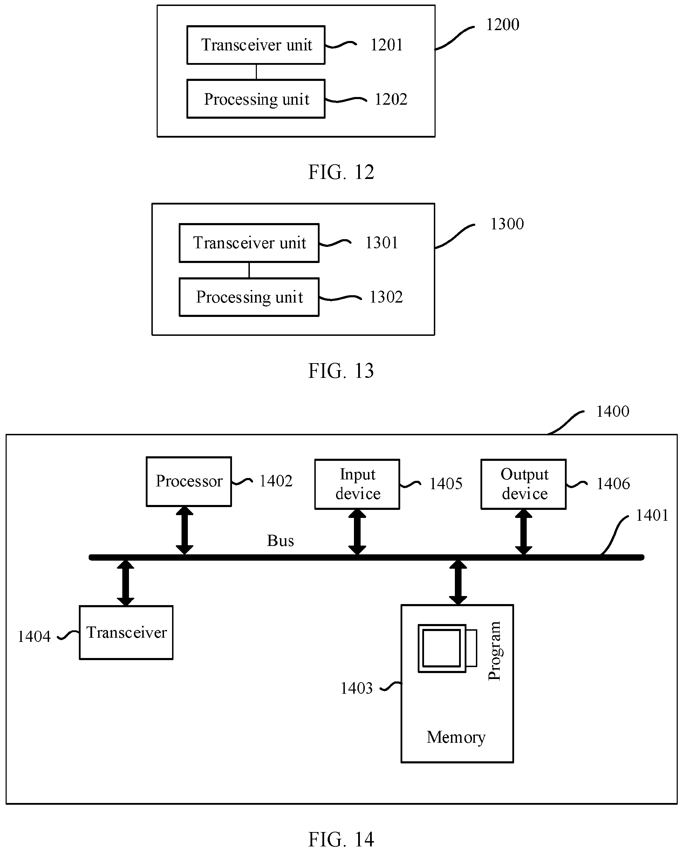

Embodiment 8 provides a communications apparatus, configured to implement a method performed by a sending device in any one of the foregoing embodiments. It can be understood that the apparatus may be an access point, may be a station, or may be a chip in the access point or the station. As shown in FIG. 12, the communications apparatus 1200 includes a transceiver unit 1201 and a processing unit 1202.

In a first example, the communications apparatus is configured to implement a method or a function performed by the sending device in Embodiment 1. For example, the processing unit is configured to determine a PPDU. The PPDU includes a signal field, the signal field includes a plurality of user fields, and at least two RUs corresponding to user fields with a same STA ID in the plurality of user fields are combined into a multi-RU. The transceiver unit sends the PPDU.

In a second example, the communications apparatus is configured to implement a method or a function performed by the sending device in Embodiment 2. For example, the processing unit is configured to perform step S101. The transceiver unit is configured to perform step S102. For an implementation of a combination indication, refer to Embodiment 2.

In a third example, the communications apparatus is configured to implement a method or a function performed by the sending device in Embodiment 3. For example, the processing unit is configured to determine a PPDU. The PPDU includes a signal field, the signal field includes MU-MIMO transmission information, and the MU-MIMO transmission information is used to indicate users who perform MU-MIMO transmission on a multi-RU, indicate specific users who perform MU-MIMO on a multi-RU and who correspond to an RU 1, or indicate a quantity of first-ranked users who perform MU-MIMO on the multi-RU and who correspond to the RU 1. The transceiver unit sends the PPDU. The multi-RU includes the RU 1 and an RU 2. For an implementation of the MU-MIMO transmission information, refer to Embodiment 3.

In a fourth example, the communications apparatus is configured to implement a method or a function performed by the sending device in Embodiment 4. For example, the processing unit is configured to perform step S201. The transceiver unit is configured to perform step S202. For an implementation of a combination indication, refer to Embodiment 4. For an implementation of a resource unit allocation subfield and the combination indication of a PPDU, refer to Embodiment 4.

In a fifth example, the communications apparatus is configured to implement a method or a function performed by the sending device in Embodiment 5. For example, the processing unit is configured to perform step S301. The transceiver unit is configured to perform step S302. A signal field further includes a resource unit allocation subfield. For an implementation of the resource unit allocation subfield and a combination indication, refer to Embodiment 5.

In a sixth example, the communications apparatus is configured to implement a method or a function performed by the sending device in Embodiment 6. For example, step S401 is performed. The transceiver unit is configured to perform step S402. For an implementation of location information of a combined RU, refer to Embodiment 6.

In a seventh example, the communications apparatus is configured to implement a method or a function performed by the sending device in Embodiment 7. For example, the processing unit determines a PPDU, and the PPDU includes a signal field. The transceiver unit sends the PPDU. The signal field further includes a resource unit allocation subfield. For an implementation of the resource unit allocation subfield and a combination indication, refer to Embodiment 7.

Embodiment 9 provides a communications apparatus, configured to implement a method performed by a receiving device in any one of the foregoing embodiments. It can be understood that the apparatus may be an access point, may be a station, or may be a chip in the access point or the station. As shown in FIG. 13, the communications apparatus 1300 includes a transceiver unit 1301 and a processing unit 1302.

In a first example, the communications apparatus is configured to implement a method or a function performed by the receiving device in Embodiment 1. For example, the transceiver unit is configured to receive a PPDU. The PPDU includes a signal field, the signal field includes a plurality of user fields, and at least two RUs corresponding to user fields with a same STA ID in the plurality of user fields are combined into a multi-RU. The processing unit is configured to determine that the at least two RUs corresponding to user fields with a same STA ID in the plurality of user fields are combined into a multi-RU.

In a second example, the communications apparatus is configured to implement a method or a function performed by the receiving device in Embodiment 2. For example, the transceiver unit is configured to perform step S103. The processing unit is configured to perform step S104. For an implementation of a combination indication, refer to Embodiment 2.

In a third example, the communications apparatus is configured to implement a method or a function performed by the receiving device in Embodiment 3. For example, the processing unit is configured to determine a PPDU. The PPDU includes a signal field, the signal field includes MU-MIMO transmission information, and the MU-MIMO transmission information is used to indicate users who perform MU-MIMO transmission on a multi-RU, indicate specific users who perform MU-MIMO on a multi-RU and who correspond to an RU 1, or indicate a quantity of first-ranked users who perform MU-MIMO on a multi-RU and who correspond to an RU 1. The transceiver unit sends the PPDU. The multi-RU includes the RU 1 and an RU 2. For an implementation of the MU-MIMO transmission information, refer to Embodiment 3.

In a fourth example, the communications apparatus is configured to implement a method or a function performed by the receiving device in Embodiment 4. For example, the transceiver unit is configured to perform step S203. The processing unit is configured to perform step S204. A signal field further includes a resource unit allocation subfield. For an implementation of the resource unit allocation subfield and a combination indication, refer to Embodiment 4.

In a fifth example, the communications apparatus is configured to implement a method or a function performed by the receiving device in Embodiment 5. For example, the transceiver unit is configured to perform step S303. The processing unit is configured to perform step S304. A signal field further includes a resource unit allocation subfield. For an implementation of the resource unit allocation subfield and a combination indication, refer to Embodiment 5.

In a sixth example, the communications apparatus is configured to implement a method or a function performed by the receiving device in Embodiment 6. For example, the transceiver unit is configured to perform step S403. The processing unit is configured to perform step S404. For an implementation of location information of a combined RU, refer to Embodiment 6.

In a seventh example, the communications apparatus is configured to implement a method or a function performed by the receiving device in Embodiment 7. For example, the processing unit determines a PPDU, and the PPDU includes a signal field. The transceiver unit sends the PPDU. The signal field further includes a resource unit allocation subfield. For an implementation of the resource unit allocation subfield and a combination indication, refer to Embodiment 7.

FIG. 14 is a schematic diagram of a possible structure of a communications apparatus 1400 according to the foregoing embodiments. The apparatus 1400 may include a processor 1402 and a transceiver 1404, and optionally, further includes a computer-readable storage medium/memory 1403, an input device 1405, an output device 1406, and a bus 1401. The processor, the transceiver, the computer-readable storage medium, and the like are connected by using the bus. A specific medium for connecting the foregoing parts is not limited in this embodiment of this application.

In a possible implementation, the apparatus 1400 may be configured as an AP 1 (for example, an AP 105) in the foregoing WLAN communications system, or as a chip system or a chip in an AP, or as a STA in a WLAN system. The apparatus 1400 may perform a method and a step related to a transmit end apparatus in any of the foregoing embodiments.

For example, the transceiver 1404 may be configured to support a sending device to communicate with a receiving device in the foregoing embodiments, and may perform a sending/receiving process related to the sending device in FIG. 4 to FIG. 10 and/or another process in a technology described in this application.

For example, the transceiver 1404 may be configured to perform S102, S202, S302, or S402. Certainly, the transceiver 1404 may be further configured to perform another process and method in the technology described in this application.

The processor 1402 is configured to control and manage an action of the sending device, and is configured to perform processing performed by the sending device in the foregoing embodiments. The processor 1402 may perform a processing process related to the sending device in FIG. 4 to FIG. 10 and/or another process used for a technology described in this application. The processor 1402 may be configured to be responsible for managing the bus and may execute a program or instructions stored in memory. For example, the processor 1402 may be configured to perform S101, S201, S301, or S401. Certainly, the processor 1402 may be further configured to perform another process and method in the technology described in this application.

The computer-readable storage medium/memory 1403 stores the program, the instructions, or data for executing the technical solutions of this application. For example, the computer-readable storage medium/memory 1403 may include instructions sufficient to allow the apparatus 1400 to perform the method and function in any of the foregoing embodiments.

In another possible implementation, the apparatus 1400 may be configured as an AP 1 (for example, an AP 105) in the foregoing WLAN communications system, or as a chip system or a chip in an AP, or as a STA in a WLAN system. The apparatus 1400 may perform a method and a step related to a receiving device in any of the foregoing embodiments.

For example, the transceiver 1404 may be configured to support a receiving device to communicate with a sending device in the foregoing embodiments, and may perform a sending/receiving process related to the receiving device in FIG. 4 to FIG. 10 and/or another process in a technology described in this application.

For example, the transceiver 1404 may be configured to perform S103, S203, S303, or S403. Certainly, the transceiver 1404 may be further configured to perform another process and method in the technology described in this application.

The processor 1402 is configured to control and manage an action of the sending device, and is configured to perform processing performed by the sending device in the foregoing embodiments. The processor 1402 may perform a processing process related to the sending device in FIG. 4 to FIG. 10 and/or another process used for a technology described in this application. The processor 1402 may be configured to be responsible for managing the bus and may execute a program or instructions stored in the memory. For example, the processor 1402 may be configured to perform S104, S204, S304, or S404. Certainly, the processor 1402 may be further configured to perform another process and method in the technology described in this application.

The computer-readable storage medium/memory 1403 stores the program, the instructions, or data for executing the technical solutions of this application. For example, the computer-readable storage medium/memory 1403 may include instructions sufficient to allow the apparatus 1400 to perform the method and function in any of the foregoing embodiments.

It can be understood that FIG. 10 merely shows a simplified design of the communications apparatus 1400. In an actual application, the communications apparatus 1400 may include any quantity of transceivers, processors, memories, and the like, and all communications apparatuses 1400 that can implement this application fall within the protection scope of this application.

The processor in the apparatus 1400 may be a general-purpose processor, for example, a general-purpose central processing unit (CPU), a network processor (Network Processor, NP for short), or a microprocessor, or may be an application-specific integrated circuit (application-specific integrated circuit, ASIC for short), or one or more integrated circuits configured to control execution of a program in a solution of this application. The processor may alternatively be a digital signal processor (Digital Signal Processor, DSP for short), a field programmable gate array (Field-Programmable Gate Array, FPGA for short) or another programmable logic device, a discrete gate or transistor logic device, or a discrete hardware assembly. Alternatively, the controller/processor may be a combination of processors implementing a computing function, for example, a combination of one or more microprocessors, or a combination of the DSP and a microprocessor. The processor usually performs a logical and arithmetic operation based on program instructions stored in the memory.

The computer-readable storage medium/memory 1403 may further store an operating system and another application program. Specifically, the program may include program code, and the program code includes computer operation instructions. More specifically, the memory may be a read-only memory (read-only memory, ROM for short), another type of static storage device that can store static information and instructions, a random access memory (random access memory, RAM for short), a dynamic storage device that can store information and instructions, a magnetic disk storage, or the like. The memory 1803 may be a combination of the foregoing memory types. In addition, the computer-readable storage medium/memory may be located in the processor, or may be located outside the processor, or may be distributed on a plurality of entities including a processor and a processing circuit. The computer-readable storage medium/memory may be specifically embodied in a computer program product. For example, the computer program product may include a computer-readable medium included in an encapsulation material.

Alternatively, the apparatus 1400 may also be configured as a general processing system. For example, the apparatus 1400 is usually referred to as a chip. The general processing system includes one or more microprocessors that provide a processor function, and an external memory that provides at least a part of the storage medium. All the components are connected to another support circuit by using an external bus architecture.

An embodiment of this application further provides a chip system. The chip system includes a processor, configured to support a sending device or a receiving device to implement a function in any one of the foregoing embodiments, for example, to generate or process data and/or information in the foregoing methods. In a possible design, the chip system may further include a memory. The memory is used to configure program instructions and data that are necessary for a transmit end or a receive end. When the processor runs the program instructions, a device installed with the chip system is enabled to implement the method in any one of the foregoing embodiments. The chip system may include a chip, or may include a chip and another discrete component.

An embodiment of this application further provides a processor, configured to be coupled to a memory. The memory stores instructions. When the processor runs the instructions, the processor is enabled to perform the method and function related to the sending device or the receiving device in any one of the foregoing embodiments. An embodiment of this application further provides a computer program product including instructions. When the instructions are run on a computer, the computer is enabled to perform the method and the function related to the sending device or the receiving device in any one of the foregoing embodiments. An embodiment of this application further provides a computer-readable storage medium. The computer-readable storage medium stores instructions. When a processor runs the instructions, the processor is enabled to perform the method and function related to the sending device or the receiving device in any one of the foregoing embodiments.

An embodiment of this application further provides an apparatus, configured to perform a method and a function related to a receive end or a transmit end in any one of the foregoing embodiments.

Method or algorithm steps described in combination with the content disclosed in this application may be implemented by hardware, or may be implemented by a processor by executing software instructions. The software instructions may include a corresponding software module, and the software module may be stored in a RAM memory, a flash memory, a ROM memory, an EPROM memory, an EEPROM memory, a register, a hard disk, a CD-ROM, or any other form of storage medium well known in the art. For example, the storage medium is coupled to the processor, so that the processor can read information from the storage medium or write information into the storage medium. Certainly, the storage medium may be a component of the processor. The processor and the storage medium may be located in an ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. When this application is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium that can be accessed by a general-purpose or dedicated computer.

The objectives, technical solutions, and benefits of this application are further described in detail in the foregoing specific embodiments. It should be understood that the foregoing description is merely a specific embodiment of this application, but is not intended to limit the protection scope of this application. The scope of the present application is merely limited by the following appended claims.

## Claims

1. A communications apparatus (1200, 1300) for indicating a combination of a plurality of resource units (RUs) to be allocated to one or more users for data transmission, wherein the communication apparatus comprises:
a processing unit (1202, 1302), configured to determine a physical layer protocol data unit, PPDU, wherein the PPDU comprises a signal field, and the signal field comprises a combination indication indicating whether to combine a first RU and a neighboring second RU into a multi-RU, wherein the combination indication comprises 2 bits, that a first value is used as a value of the combination indication indicates not to combine the first RU and the neighboring second RU, that a second value is used as the value of the combination indication indicates to combine the first RU and a left neighboring second RU, and that a third value is used as the value of the combination indication indicates to combine the first RU and a right neighboring second RU; and
a transceiver unit (1201, 1301), configured to send the PPDU.

2. A communications apparatus (1200, 1300) for indicating a combination of a plurality of resource units (RUs) to be allocated to one or more users for data transmission, wherein the communication apparatus comprises:
a transceiver unit (1201, 1301), configured to receive a physical layer protocol data unit, PPDU, wherein the PPDU comprises a signal field, the signal field comprises a combination indication indicating whether to combine a first RU and a neighboring second RU into a multi-RU, and the signal field does not comprise a user field corresponding to the second RU, wherein the combination indication comprises 2 bits, that a first value is used as a value of the combination indication indicates not to combine the first RU and the neighboring second RU, that a second value is used as the value of the combination indication indicates to combine the first RU and a left neighboring second RU, and that a third value is used as the value of the combination indication indicates to combine the first RU and a right neighboring second RU; and
a processing unit (1202, 1302), configured to determine, based on the signal field, whether the multi-RU is allocated to the communications apparatus.

3. The communications apparatus according to claim 1 or 2, wherein the signal field further comprises a resource unit allocation subfield, the resource unit allocation subfield indicates sizes and locations of a plurality of allocated RUs on one 20 MHz channel, and the plurality of RUs comprise the first RU.

4. The communications apparatus according to any one of claims 1 to 3, wherein the resource unit allocation subfield indicates that the corresponding 20 MHz channel is divided into any one of the following wherein [N, M] refers to respective N-tone and M-tone RUs: [106, -, 52, 52], [52, 52, -, 106], [106, -, 106], and [52, 52, -, 52, 52]; and
the second RU is a center 26-tone RU, and the first RU is a 106-tone RU or a 52-tone RU neighboring to the center 26-tone RU.

5. The communications apparatus according to any one of claims 1 to 3, wherein the resource unit allocation subfield indicates that the corresponding 20 MHz channel is divided into any one of the following wherein [N, M] refers to respective N-tone and M-tone RUs: [26, 26, 26, 26, -, 106], [26, 26, 52, -, 106], [52, 26, 26, -, 106], [106, -, 26, 26, 26, 26], [106, -, 52, 26, 26], or [106, -, 26, 26, 52], the second RU is a center 26-tone RU, and the first RU is a 106-tone RU neighboring to the center 26-tone RU.

6. The communications apparatus according to any one of claims 1 to 5, wherein the signal field further comprises a user field corresponding to the first RU, and the signal field does not comprise a user field corresponding to the second RU;
theuser field corresponding to the first RU comprises the combination indication; and
if the combination indication indicates to combine the first RU and the second RU into a multi-RU, the multi-RU is allocated to a user indicated by the user field corresponding to the first RU, the PPDU further comprises a data field, and the data field comprises data carried on the multi-RU.

7. The communications apparatus according to claim 6, wherein the first RU is a 106-tone RU, and the 106-tone RU corresponds to at least two user fields.

8. A method of indicating a combination of a plurality of resource units (RUs) to be allocated to one or more users for data transmission, wherein the method comprises:
determining a physical layer protocol data unit, PPDU, wherein the PPDU comprises a signal field, and the signal field comprises a combination indication indicating whether to combine a first RU and a neighboring second RU into a multi-RU, wherein the combination indication comprises 2 bits, that a first value is used as a value of the combination indication indicates not to combine the first RU and the neighboring second RU, that a second value is used as the value of the combination indication indicates to combine the first RU and a left neighboring second RU, and that a third value is used as the value of the combination indication indicates to combine the first RU and a right neighboring second RU; and
sending the PPDU.

9. A method of indicating a combination of a plurality of resource units (RUs) to be allocated to one or more users for data transmission, wherein the method comprises:
receiving a physical layer protocol data unit, PPDU, wherein the PPDU comprises a signal field, the signal field comprises a combination indication indicating whether to combine a first RU and a neighboring second RU into a multi-RU, and the signal field does not comprise a user field corresponding to the second RU, wherein the combination indication comprises 2 bits, that a first value is used as a value of the combination indication indicates not to combine the first RU and the neighboring second RU, that a second value is used as the value of the combination indication indicates to combine the first RU and a left neighboring second RU, and that a third value is used as the value of the combination indication indicates to combine the first RU and a right neighboring second RU; and
determining, based on the signal field, whether the multi-RU is allocated to a communication apparatus (1200, 1300).

10. The method according to claim 8 or 9, wherein the signal field further comprises a resource unit allocation subfield, the resource unit allocation subfield indicates sizes and locations of a plurality of allocated RUs on one 20 MHz channel, and the plurality of RUs comprise the first RU.

11. The method according to any one of claims 8 to 10, wherein the resource unit allocation subfield indicates that the corresponding 20 MHz channel is divided into any one of the following wherein [N, M] refers to respective N-tone and M-tone RUs: [106, -, 52, 52], [52, 52, -, 106], [106, -, 106], and [52, 52, -, 52, 52]; and
the second RU is a center 26-tone RU, and the first RU is a 106-tone RU or a 52-tone RU neighboring to the center 26-tone RU.

12. The method according to any one of claims 8 to 10, wherein the resource unit allocation subfield indicates that the corresponding 20 MHz channel is divided into any one of the following wherein [N, M] refers to respective N-tone and M-tone RUs: [26, 26, 26, 26, -, 106], [26, 26, 52, -, 106], [52, 26, 26, -, 106], [106, -, 26, 26, 26, 26], [106, -, 52, 26, 26], or [106, -, 26, 26, 52], the second RU is a center 26-tone RU, and the first RU is a 106-tone RU neighboring to the center 26-tone RU.

13. The method according to any one of claims 8 to 12, wherein the signal field further comprises a user field corresponding to the first RU, and the signal field does not comprise a user field corresponding to the second RU;
the user field corresponding to the first RU comprises the combination indication; and
if the combination indication indicates to combine the first RU and the second RU into a multi-RU, the multi-RU is allocated to a user indicated by the user field corresponding to the first RU, the PPDU further comprises a data field, and the data field comprises data carried on the multi-RU.

## Patentansprüche

1. Kommunikationsvorrichtung (1200, 1300) zum Anzeigen einer Kombination einer Vielzahl von Ressourceneinheiten (RUs), die einem oder mehreren Benutzer(n) zur Datenübertragung zugewiesen werden sollen, wobei die Kommunikationsvorrichtung umfasst:
eine Verarbeitungseinheit (1202, 1302), die konfiguriert ist, um eine Bitübertragungsschichtprotokolldateneinheit, PPDU, zu bestimmen, wobei die PPDU ein Signalfeld umfasst und das Signalfeld eine Kombinationsanzeige umfasst, die anzeigt, ob eine erste RU und eine benachbarte zweite RU zu einer Multi-RU kombiniert werden sollen, wobei die Kombinationsanzeige 2 Bit umfasst, dass ein erster Wert als ein Wert der Kombinationsanzeige verwendet wird, der anzeigt, dass die erste RU und die benachbarte zweite RU nicht kombiniert werden sollen, dass ein zweiter Wert als der Wert der Kombinationsanzeige verwendet wird, der anzeigt, dass die erste RU und eine links benachbarte zweite RU kombiniert werden sollen, und dass ein dritter Wert als der Wert der Kombinationsanzeige verwendet wird, der anzeigt, dass die erste RU und eine rechts benachbarte zweite RU kombiniert werden sollen; und
eine Transceivereinheit (1201, 1301), die konfiguriert ist, um die PPDU zu senden.

2. Kommunikationsvorrichtung (1200, 1300) zum Anzeigen einer Kombination einer Vielzahl von Ressourceneinheiten (RUs), die einem oder mehreren Benutzer(n) zur Datenübertragung zugewiesen werden sollen, wobei die Kommunikationsvorrichtung umfasst:
eine Transceivereinheit (1201, 1301), die konfiguriert ist, um eine Bitübertragungsschichtprotokolldateneinheit, PPDU, zu empfangen, wobei die PPDU ein Signalfeld umfasst, das Signalfeld eine Kombinationsanzeige umfasst, die anzeigt, ob eine erste RU und eine benachbarte zweite RU zu einer Multi-RU kombiniert werden sollen, und das Signalfeld kein Benutzerfeld umfasst, das der zweiten RU entspricht, wobei die Kombinationsanzeige 2 Bit umfasst, dass ein erster Wert als ein Wert der Kombinationsanzeige verwendet wird, der anzeigt, dass die erste RU und die benachbarte zweite RU nicht kombiniert werden sollen, dass ein zweiter Wert als der Wert der Kombinationsanzeige verwendet wird, der anzeigt, dass die erste RU und
eine links benachbarte zweite RU kombiniert werden sollen, und dass ein dritter Wert als der Wert der Kombinationsanzeige verwendet wird, der anzeigt, dass die erste RU und eine rechts benachbarte zweite RU kombiniert werden sollen; und
eine Verarbeitungseinheit (1202, 1302), die konfiguriert ist, um basierend auf dem Signalfeld zu bestimmen, ob die Multi-RU der Kommunikationsvorrichtung zugewiesen ist.

3. Kommunikationsvorrichtung nach Anspruch 1 oder 2, wobei das Signalfeld ferner ein Unterfeld zur Ressourceneinheitszuweisung umfasst, das Unterfeld zur Ressourceneinheitszuweisung Größen und Positionen einer Vielzahl zugewiesener RUs auf einem 20-MHz-Kanal anzeigt und die Vielzahl von RUs die erste RU umfasst.

4. Kommunikationsvorrichtung nach einem der Ansprüche 1 bis 3, wobei das Unterfeld zur Ressourceneinheitszuweisung anzeigt, dass der entsprechende 20-MHz-Kanal in eines der Folgenden unterteilt ist, wobei sich [N, M] auf jeweilige N-Ton- und M-Ton-RUs bezieht: [106, -, 52, 52], [52, 52, -, 106], [106, -, 106] und [52, 52, -, 52, 52]; und die zweite RU eine mittlere 26-Ton-RU ist und die erste RU eine 106-Ton-RU oder eine 52-Ton-RU benachbart zur mittleren 26-Ton-RU ist.

5. Kommunikationsvorrichtung nach einem der Ansprüche 1 bis 3, wobei das Unterfeld zur Ressourceneinheitszuweisung anzeigt, dass der entsprechende 20-MHz-Kanal in eines der Folgenden unterteilt ist, wobei sich [N, M] auf jeweilige N-Ton- und M-Ton-RUs bezieht: [26, 26, 26, 26, -, 106], [26, 26, 52, -, 106], [52, 26, 26, -, 106], [106, -, 26, 26, 26, 26], [106, -, 52, 26, 26] oder [106, -, 26, 26, 52], die zweite RU eine mittlere 26-Ton-RU ist und die erste RU eine 106-Ton-RU benachbart zur mittleren 26-Ton-RU ist.

6. Kommunikationsvorrichtung nach einem der Ansprüche 1 bis 5, wobei das Signalfeld ferner ein Benutzerfeld umfasst, das der ersten RU entspricht, und das Signalfeld kein Benutzerfeld umfasst, das der zweiten RU entspricht;
das Benutzerfeld, das der ersten RU entspricht, die Kombinationsanzeige umfasst und wenn die Kombinationsanzeige anzeigt, dass die erste RU und die zweite RU zu einer Multi-RU kombiniert werden sollen, die Multi-RU einem Benutzer zugewiesen wird, der durch das Benutzerfeld angezeigt wird, das der ersten RU entspricht, wobei die PPDU ferner ein Datenfeld umfasst und das Datenfeld Daten umfasst, die auf der Multi-RU übertragen werden.

7. Kommunikationsvorrichtung nach Anspruch 6, wobei die erste RU eine 106-Ton-RU ist und die 106-Ton-RU mindestens zwei Benutzerfeldern entspricht.

8. Verfahren zum Anzeigen einer Kombination einer Vielzahl von Ressourceneinheiten (RUs), die einem oder mehreren Benutzer(n) zur Datenübertragung zugewiesen werden sollen, wobei das Verfahren umfasst:
Bestimmen einer Bitübertragungsschichtprotokolldateneinheit, PPDU, wobei die PPDU ein Signalfeld umfasst und das Signalfeld eine Kombinationsanzeige umfasst, die anzeigt, ob eine erste RU und eine benachbarte zweite RU zu einer Multi-RU kombiniert werden sollen, wobei die Kombinationsanzeige 2 Bit umfasst, dass ein erster Wert als ein Wert der Kombinationsanzeige verwendet wird, der anzeigt, dass die erste RU und die benachbarte zweite RU nicht kombiniert werden sollen, dass ein zweiter Wert als der Wert der Kombinationsanzeige verwendet wird, der anzeigt, dass die erste RU und eine links benachbarte zweite RU kombiniert werden sollen, und dass ein dritter Wert als der Wert der Kombinationsanzeige verwendet wird, der anzeigt, dass die erste RU und eine rechts benachbarte zweite RU kombiniert werden sollen; und
Senden der PPDU.

9. Verfahren zum Anzeigen einer Kombination einer Vielzahl von Ressourceneinheiten (RUs), die einem oder mehreren Benutzer(n) zur Datenübertragung zugewiesen werden sollen, wobei das Verfahren umfasst:
Empfangen einer Bitübertragungsschichtprotokolldateneinheit, PPDU, wobei die PPDU ein Signalfeld umfasst, das Signalfeld eine Kombinationsanzeige umfasst, die anzeigt, ob eine erste RU und eine benachbarte zweite RU zu einer Multi-RU kombiniert werden sollen, und das Signalfeld kein Benutzerfeld umfasst, das der zweiten RU entspricht, wobei die Kombinationsanzeige 2 Bit umfasst, dass ein erster Wert als ein Wert der Kombinationsanzeige verwendet wird, der anzeigt, dass die erste RU und die benachbarte zweite RU nicht kombiniert werden sollen, dass ein zweiter Wert als der Wert der Kombinationsanzeige verwendet wird, der anzeigt, dass die erste RU und eine links benachbarte zweite RU kombiniert werden sollen, und dass ein dritter Wert als der Wert der Kombinationsanzeige verwendet wird, der anzeigt, dass die erste RU und eine rechts benachbarte zweite RU kombiniert werden sollen; und
Bestimmen, basierend auf dem Signalfeld, ob die Multi-RU einer Kommunikationsvorrichtung (1200, 1300) zugewiesen ist.

10. Verfahren nach Anspruch 8 oder 9, wobei das Signalfeld ferner ein Unterfeld zur Ressourceneinheitszuweisung umfasst, das Unterfeld zur Ressourceneinheitszuweisung Größen und Positionen einer Vielzahl zugewiesener RUs auf einem 20-MHz-Kanal anzeigt und die Vielzahl von RUs die erste RU umfasst.

11. Verfahren nach einem der Ansprüche 8 bis 10, wobei das Unterfeld zur Ressourceneinheitszuweisung anzeigt, dass der entsprechende 20-MHz-Kanal in eines der Folgenden unterteilt ist, wobei sich [N, M] auf jeweilige N-Ton- und M-Ton-RUs bezieht: [106, -, 52, 52], [52, 52, -, 106], [106, -, 106] und [52, 52, -, 52, 52]; und die zweite RU eine mittlere 26-Ton-RU ist und die erste RU eine 106-Ton-RU oder eine 52-Ton-RU benachbart zur mittleren 26-Ton-RU ist.

12. Verfahren nach einem der Ansprüche 8 bis 10, wobei das Unterfeld zur Ressourceneinheitszuweisung anzeigt, dass der entsprechende 20-MHz-Kanal in eines der Folgenden unterteilt ist, wobei sich [N, M] auf jeweilige N-Ton- und M-Ton-RUs bezieht: [26, 26, 26, 26, -, 106], [26, 26, 52, -, 106], [52, 26, 26, -, 106], [106, -, 26, 26, 26, 26], [106, -, 52, 26, 26] oder [106, -, 26, 26, 52], die zweite RU eine mittlere 26-Ton-RU ist und die erste RU eine 106-Ton-RU benachbart zur mittleren 26-Ton-RU ist.

13. Verfahren nach einem der Ansprüche 8 bis 12, wobei das Signalfeld ferner ein Benutzerfeld umfasst, das der ersten RU entspricht, und das Signalfeld kein Benutzerfeld umfasst, das der zweiten RU entspricht;
das der ersten RU entsprechende Benutzerfeld die Kombinationsanzeige umfasst und wenn die Kombinationsanzeige anzeigt, dass die erste RU und die zweite RU zu einer Multi-RU kombiniert werden sollen, die Multi-RU einem Benutzer zugewiesen wird, der durch das Benutzerfeld angezeigt wird, das der ersten RU entspricht, wobei die PPDU ferner ein Datenfeld umfasst und das Datenfeld Daten umfasst, die auf der Multi-RU übertragen werden.

## Revendications

1. Appareil de communications (1200, 1300) permettant d'indiquer une combinaison d'une pluralité d'unités de ressource (RU) à attribuer à un ou plusieurs utilisateurs pour une transmission de données, dans lequel l'appareil de communication comprend :
une unité de traitement (1202, 1302), configurée pour déterminer une unité de données de protocole de couche physique, PPDU, dans lequel la PPDU comprend un champ de signal, et le champ de signal comprend une indication de combinaison indiquant s'il faut combiner une première RU et une seconde RU voisine en une multi-RU, dans lequel l'indication de combinaison comprend 2 bits, le fait qu'une première valeur est utilisée comme une valeur de l'indication de combinaison indique de ne pas combiner la première RU et la seconde RU voisine, le fait qu'une deuxième valeur est utilisée comme la valeur de l'indication de combinaison indique de combiner la première RU et une seconde RU voisine de gauche, et le fait qu'une troisième valeur est utilisée comme la valeur de l'indication de combinaison indique de combiner la première RU et une seconde RU voisine de droite ; et
un transmetteur-récepteur (1201, 1301), configuré pour envoyer la PPDU.

2. Appareil de communications (1200, 1300) permettant d'indiquer une combinaison d'une pluralité d'unités de ressource (RU) à attribuer à un ou plusieurs utilisateurs pour une transmission de données, dans lequel l'appareil de communication comprend :
un transmetteur-récepteur (1201, 1301), configuré pour recevoir une unité de données de protocole de couche physique, PPDU, dans lequel la PPDU comprend un champ de signal, le champ de signal comprend une indication de combinaison indiquant s'il faut combiner une première RU et une seconde RU voisine en une multi-RU, et le champ de signal ne comprend pas un champ d'utilisateur correspondant à la seconde RU, dans lequel l'indication de combinaison comprend 2 bits, le fait qu'une première valeur est utilisée comme une valeur de l'indication de combinaison indique de ne pas combiner la première RU et la seconde RU voisine, le fait qu'une deuxième valeur est utilisée comme la valeur de l'indication de combinaison indique de combiner la première RU et une seconde RU voisine de gauche, et le fait qu'une troisième valeur est utilisée comme la valeur de l'indication de combinaison indique de combiner la première RU et une seconde RU voisine de droite ; et
une unité de traitement (1202, 1302), configurée pour déterminer, en fonction du champ de signal, si la multi-RU est attribuée à l'appareil de communications.

3. Appareil de communications selon la revendication 1 ou 2, dans lequel le champ de signal comprend en outre un sous-champ d'attribution d'unité de ressource, le sous-champ d'attribution d'unité de ressource indique des tailles et des emplacements d'une pluralité de RU attribuées sur un canal de 20 MHz, et la pluralité de RU comprend la première RU.

4. Appareil de communications selon l'une quelconque des revendications 1 à 3, dans lequel le sous-champ d'attribution d'unité de ressource indique que le canal de 20 MHz correspondant est divisé en l'un quelconque de ce qui suit, dans lequel [N, M] fait référence à des RU respectives de tonalité N et de tonalité M : [106, -, 52, 52], [52, 52, -, 106], [106, -, 106], et [52, 52, -, 52, 52] ; et
la seconde RU est une RU centrale à 26 tonalités, et la première RU est une RU à 106 tonalités ou une RU à 52 tonalités voisine de la RU centrale à 26 tonalités.

5. Appareil de communications selon l'une quelconque des revendications 1 à 3, dans lequel le sous-champ d'attribution d'unité de ressource indique que le canal de 20 MHz correspondant est divisé en l'un quelconque de ce qui suit, dans lequel [N, M] fait référence à des RU respectives de tonalité N et de tonalité M : [26, 26, 26, 26, -, 106], [26, 26, 52, -, 106], [52, 26, 26, -, 106], [106, -, 26, 26, 26, 26], [106, -, 52, 26, 26], ou [106, -, 26, 26, 52], la seconde RU est une RU centrale à 26 tonalités, et la première RU est une RU à 106 tonalités voisine de la RU centrale à 26 tonalités.

6. Appareil de communications selon l'une quelconque des revendications 1 à 5, dans lequel le champ de signal comprend en outre un champ d'utilisateur correspondant à la première RU, et le champ de signal ne comprend pas un champ d'utilisateur correspondant à la seconde RU ;
le champ d'utilisateur correspondant à la première RU comprend l'indication de combinaison ; et
si l'indication de combinaison indique de combiner la première RU et la seconde RU en une multi-RU, la multi-RU est attribuée à un utilisateur indiqué par le champ d'utilisateur correspondant à la première RU, la PPDU comprend en outre un champ de données, et le champ de données comprend des données transportées sur la multi-RU.

7. Appareil de communications selon la revendication 6, dans lequel la première RU est une RU à 106 tonalités, et la RU à 106 tonalités correspond à au moins deux champs d'utilisateur.

8. Procédé d'indication d'une combinaison d'une pluralité d'unités de ressource (RU) à attribuer à un ou plusieurs utilisateurs pour une transmission de données, dans lequel le procédé comprend :
la détermination d'une unité de données de protocole de couche physique, PPDU, dans lequel la PPDU comprend un champ de signal, et le champ de signal comprend une indication de combinaison indiquant s'il faut combiner une première RU et une seconde RU voisine en une multi-RU, dans lequel l'indication de combinaison comprend 2 bits, le fait qu'une première valeur est utilisée comme une valeur de l'indication de combinaison indique de ne pas combiner la première RU et la seconde RU voisine, le fait qu'une deuxième valeur est utilisée comme la valeur de l'indication de combinaison indique de combiner la première RU et une seconde RU voisine de gauche, et le fait qu'une troisième valeur est utilisée comme la valeur de l'indication de combinaison indique de combiner la première RU et une seconde RU voisine de droite ; et
l'envoi de la PPDU.

9. Procédé d'indication d'une combinaison d'une pluralité d'unités de ressource (RU) à attribuer à un ou plusieurs utilisateurs pour une transmission de données, dans lequel le procédé comprend :
la réception d'une unité de données de protocole de couche physique, PPDU, dans lequel la PPDU comprend un champ de signal, le champ de signal comprend une indication de combinaison indiquant s'il faut combiner une première RU et une seconde RU voisine en une multi-RU, et le champ de signal ne comprend pas un champ d'utilisateur correspondant à la seconde RU, dans lequel l'indication de combinaison
comprend 2 bits, le fait qu'une première valeur est utilisée comme une valeur de l'indication de combinaison indique de ne pas combiner la première RU et la seconde RU voisine, le fait qu'une deuxième valeur est utilisée comme la valeur de l'indication de combinaison indique de combiner la première RU et une seconde RU voisine de gauche, et le fait qu'une troisième valeur est utilisée comme la valeur de l'indication de combinaison indique de combiner la première RU et une seconde RU voisine de droite ; et
le fait de déterminer, en fonction du champ de signal, si la multi-RU est attribuée à un appareil de communication (1200, 1300).

10. Procédé selon la revendication 8 ou 9, dans lequel le champ de signal comprend en outre un sous-champ d'attribution d'unité de ressource, le sous-champ d'attribution d'unité de ressource indique des tailles et des emplacements d'une pluralité de RU attribuées sur un canal de 20 MHz, et la pluralité de RU comprend la première RU.

11. Procédé selon l'une quelconque des revendications 8 à 10, dans lequel le sous-champ d'attribution d'unité de ressource indique que le canal de 20 MHz correspondant est divisé en l'un quelconque de ce qui suit, dans lequel [N, M] fait référence à des RU respectives de tonalité N et de tonalité M : [106, -, 52, 52], [52, 52, -, 106], [106, -, 106], et [52, 52, -, 52, 52] ; et
la seconde RU est une RU centrale à 26 tonalités, et la première RU est une RU à 106 tonalités ou une RU à 52 tonalités voisine de la RU centrale à 26 tonalités.

12. Procédé selon l'une quelconque des revendications 8 à 10, dans lequel le sous-champ d'attribution d'unité de ressource indique que le canal de 20 MHz correspondant est divisé en l'un quelconque de ce qui suit, dans lequel [N, M] fait référence à des RU respectives de tonalité N et de tonalité M : [26, 26, 26, 26, -, 106], [26, 26, 52, -, 106], [52, 26, 26, -, 106], [106, -, 26, 26, 26, 26], [106, -, 52, 26, 26], ou [106, -, 26, 26, 52], la seconde RU est une RU centrale à 26 tonalités, et la première RU est une RU à 106 tonalités voisine de la RU centrale à 26 tonalités.

13. Procédé selon l'une quelconque des revendications 8 à 12, dans lequel le champ de signal comprend en outre un champ d'utilisateur correspondant à la première RU, et le champ de signal ne comprend pas un champ d'utilisateur correspondant à la seconde RU ;
le champ d'utilisateur correspondant à la première RU comprend l'indication de combinaison ; et
si l'indication de combinaison indique de combiner la première RU et la seconde RU en une multi-RU, la multi-RU est attribuée à un utilisateur indiqué par le champ d'utilisateur correspondant à la première RU, la PPDU comprend en outre un champ de données, et le champ de données comprend des données transportées sur la multi-RU.
